(19) Europäisches Patentamt
European Patent Office
Office européen des brevets

(11) EP 4 713 518 B1

(12) EUROPEAN PATENT SPECIFICATION

(45) Date of publication and mention
of the grant of the patent:
29.04.2026 Bulletin 2026/18

(21) Application number: 24745574.4

(22) Date of filing: 28.06.2024

(51) International Patent Classification (IPC):
*D04H 1/724* (2012.01)     *D04H 1/54* (2012.01)
*B32B 5/02* (2006.01)     *B32B 5/24* (2006.01)

(52) Cooperative Patent Classification (CPC):
**D04H 1/724; B32B 5/022; B32B 5/24; D04H 1/54;**
B32B 2262/0253

(86) International application number:
**PCT/US2024/036098**

(87) International publication number:
**WO 2025/006942 (02.01.2025 Gazette 2025/01)**

## (54) HIGH BARRIER BREATHABLE FLASH-SPUN SHEET

ATMUNGSAKTIVE FLASH-GESPONNENE FOLIE MIT HOHER BARRIERE

FEUILLE RESPIRANTE À BARRIÈRE ÉLEVÉE FILÉE PAR ÉTINCELAGE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 30.06.2023 EP 23182687

(43) Date of publication of application:
25.03.2026 Bulletin 2026/13

(73) Proprietor: DuPont Safety & Construction, Inc.
Wilmington, DE 19805 (US)

(72) Inventors:
• VAN MEERVELD, Jan
5326 Contern (LU)
• SAMANIEGO, Muriel
63263 Neu-Isenburg (DE)

(74) Representative: Abitz & Partner
Postfach 86 01 09
81628 München (DE)

(56) References cited:
WO-A1-2015/195898     WO-A1-2015/196217
WO-A1-2016/200873     US-A- 3 860 369
US-A- 5 972 147     US-A1- 2003 032 355
US-A1- 2003 165 667     US-B2- 7 744 989

Remarks:
The file contains technical information submitted after the application was filed and not included in this specification

EP 4 713 518 B1

## Description

**FIELD OF THE INVENTION**

The present invention relates to (i) a bonded sheet of nonwoven flash-spun plexifilamentary fibrils exhibiting good barrier properties, a high degree of breathability, good surface robustness and mechanical strength, including nail tear resistance, (ii) a process for the preparation of a bonded sheet of nonwoven flash-spun plexifilamentary fibrils, and (iii) a multilayer sheet structure and an article comprising the bonded sheet of nonwoven flash-spun plexifilamentary fibrils.

**BACKGROUND**

Prior art fabrics for protective apparel are often a composite fabric wherein a microporous film or other water vapor permeable film is laminated to a nonwoven sheet. The microporous film provides the barrier properties to the composite fabric, especially barrier to liquid penetration, and the nonwoven sheet provides the strength of the composite fabric. While the use of a film provides a liquid impermeable barrier, the breathability of such films is insufficient to provide a comfortable protective garment. Composite fabrics constructed from a microporous film in combination with a nonwoven sheet provide a balance of breathability, barrier properties to liquids, and strength, but the property balance of prior art composite fabrics for protective apparel is often insufficient in one or more aspects. A particular weakness of some prior art composite fabrics for protective apparel is that the microporous film laminated to the surface of the nonwoven sheet is relatively thin and mechanically weak such that the composite fabric has insufficient surface robustness for use in more severe use environments.

Fabrics used in the construction industry, such as in house wrap, roofing underlay, and roof lining applications are often composite fabrics wherein one or more relatively porous nonwoven sheets provide mechanical strength and one or more further barrier sheets, films or coatings prevent transmission of liquid water through the structure while allowing a controlled level of air permeability and moisture vapor permeability. Barrier sheets or films used to provide the water barrier properties to the composite fabric are typically microporous films or layers made from moisture vapor permeable polymers such as thermoplastic polyurethane, and these are necessarily thin and therefore have poor mechanical properties. Nonwoven sheets used to provide mechanical strength to the composite fabric are typically spunbonded sheets, and it is common for the fragile barrier layer to be protected by sandwiching it between two nonwoven sheets. To prevent water ingress where separate sheets of composite fabric are joined in a wall or roof structure, the joints are usually taped using an adhesive tape. This taping of joints between adjacent sheets of composite fabric frequently has to be corrected during mounting, and composite fabrics of the prior art sometimes have the disadvantage that they do not remain fully intact when the adhesive tape is removed to allow the composite sheet to be re-positioned. Moreover, such composite fabrics often have an unsatisfying balance of breathability, strength and liquid barrier properties for some types of construction in certain climatic conditions.

Flash-spun nonwoven sheets, such as Tyvek® nonwoven sheets, have been developed with wide-ranging properties suitable for use in a variety of applications, including, but not limited to, applications in construction industry and as protective apparel. Their production usually involves two stages, a first stage in which fibrils are produced and laid down in an overlapping manner to produce a fibril assembly in the form of a nonwoven sheet, and a second stage in which adjacent fibrils are bonded via thermal bonding to obtain a robust structure which cannot be easily disassembled. The properties of the final nonwoven sheet are impacted by various factors from the first and second stages.

Flash-spinning is a method for producing fibrils having a unique plexifilamentary structure. It involves preparing a solution of a fibril-forming polymer in a spin agent at a pressure above the vapor pressure of the spin agent and at a temperature above the normal boiling point of the spin agent, and releasing that solution into a zone of substantially lower temperature and pressure such that the spin agent flash evaporates and the polymer solidifies in the form of plexifilamentary fibrils. Examples of flash spinning processes are disclosed in US 3,081,519 and US 3,227,794.

The properties of flash-spun fibrils depend on, among other factors, the polymer or blend of polymers used to form them, the spin-agent used to produce the spin-fluid, the concentration of polymer in the spin-fluid, and the temperature of the spin-fluid during spinning. As with other types of spinning technology, the properties of an initial fibril assembly are modified by subsequent thermal bonding to produce a flash-spun nonwoven sheet.

Thermal bonding is a common process for bonding nonwoven sheets in which heat is used to soften the polymer from which the fibrils are made, typically, by passing the nonwoven sheet through an arrangement of heated rolls, with a back-up roll which forms a nip or without a back-up roll. The degree of bonding can vary based on the temperature and pressure, and time during which these are applied. Bonding of the nonwoven sheet also varies spatially depending on the rolls used and area to which the bonding is applied, e.g., using smooth surfaced rolls to apply uniform heat and pressure over the entire surface versus using patterned rolls to apply heat and pressure locally over only a portion of the surface to form an embossed pattern in the final nonwoven sheet.

US 3,442,740 and US 3,532,589 describe thermal bonding on a smooth heated roll where one or both sides of the nonwoven sheet are subjected to generally uniform, full surface contact thermal bonding. In this process, a surface bonded nonwoven sheet product is obtained having a paper-like feel and satisfying surface robustness which is suitable for uses such as packaging and print media but too stiff for use in garments, being uncomfortable and "noisy" for the wearer. Such surface bonded nonwoven sheet product is also unsuitable for roof lining applications, creating noise due to wind movement. Thermal bonding using a thermal calendar bonder, such as that described in US 5,972,147, also tends to produce a stiffer nonwoven sheet without the softness desired for most garment applications, such as protective apparel. The obtained nonwoven sheet usually has a high degree of bonding and strength, but not necessarily sufficient surface robustness as fibrils can easily be pulled out of the surface.

US 3,478,141 and US 4,091,137 describe thermal bonding carried out by passing nonwoven sheets between heated engraved embossing rolls and rubber-coated back-up rolls to bond one or both sides of the nonwoven sheet only in defined areas, producing softer and more drapable materials suitable for use in garment applications. The embossing roll can contain different patterns, such as a point pattern as described in US 3,478,141, US 6,610,390, and US 2004/241399 A1, a rib pattern as described in US 2003/0032355 A1 and US 2003/00165667 A1, a linen pattern or a random pattern as described in US 7,744,989, or a combination of different patterns as described in US 5,620,779 and US 5,964,742. The nonwoven sheet may pass through one or multiple pairs of a heated embossing roll and a rubber-coated back-up roll and may also wrap partially around one or more heated embossing rolls to transfer heat into the nonwoven sheet prior to reaching the nip between any such embossing roll and a rubber-coated back-up roll. In addition, the nonwoven sheet may be in contact with one or more pre-heat or cooling rolls before and after passing through each pair of embossing and back-up rolls, in a configuration as described in US 5,972,147. US 6,034,008 and US 2003/00165667 A1 describe a process in which one side is embossed with a "rib" pattern of discrete bond points and the other side is embossed over a substantial portion of the surface with a "linen" pattern. However, these prior art bonding processes with embossing rolls tend to produce a nonwoven sheet having a more fragile surface.

Thermal bonding impacts different properties of the nonwoven sheet in different ways.

The flux properties of nonwoven sheets, i.e., the ability of the fibril assembly to allow free movement of air or other gases such as water vapor through it, either by diffusion or by bulk flow under a pressure difference, may be altered in different ways depending on the bonding process. Heating can lead to relaxation of tension within the fibrils and fibril shrinkage, resulting in an increase in the space between the fibrils and an increase in flux. Conversely, pressure applied during bonding can compress the structure, reducing the space between the fibrils through which gases can move, resulting in a decrease in flux. Moreover, if temperatures and pressures are high enough to cause fibrils to melt and fuse together extensively, this can create film-like regions which allow very little flux.

The barrier properties of nonwoven sheets, i.e., the ability of the fibril assembly to prevent particles in the air from passing through it, or liquids such as water to penetrate it under pressure, tend to change in the converse manner after bonding as, for instance, reduced pore sizes created by compression during bonding result in greater resistance to the passage of particles or liquids through the structure.

Mechanical properties such as delamination resistance, puncture and tear resistance, surface robustness, nail tear resistance, and tensile strength may increase or decrease, as the degree of bonding increases. However, the stronger connections between fibrils resulting from bonding, and the limitation of their ability to move relative to each other, increases the stiffness of the bonded sheet and tends to negatively affect the flux properties of the bonded sheet.

To improve surface robustness of nonwoven sheets, a high degree of bonding of the nonwoven sheets is required (leading to higher sheet strength) so that fibrils at the surface are well bonded into the structure and can resist peel forces applied to the surface. It is expected that full surface bonding would be advantageous in this regard. However, the effect of bonding on sheet stiffness is especially notable when bonding is applied uniformly over the whole surface. This results in nonwoven sheets having a paper-like texture often referred to as "hard-structures" which tend to produce a lot of noise when flexed or bent, reducing the comfort for the wearer for garment applications. When a lower degree of bonding is applied by using embossed rolls to create areas having greater and lesser degrees of bonding, quieter and more flexible, softer, fabric-like structures can be achieved, often referred to as "softstructures." However, a lower degree of bonding may reduce the surface robustness and result in a low nail tear resistance.

These complex interactions of behaviors mean that thermally bonding a nonwoven sheet to produce a product for a particular application typically requires a compromise in the desired properties of the final nonwoven sheet.

It is possible to recover some softness in a bonded, nonwoven sheet, by applying processes known in the textile industry such as softening or re-lofting. In these processes, the nonwoven sheet is passed through equipment which locally distorts the material in a way that breaks or partially breaks some of the bonding between fibrils, allowing more relative motion and increasing the flexibility of the nonwoven sheet. These changes in mechanical properties are typically accompanied by an increase in flux properties and a loss in barrier properties.

US 3,408,709 describes a softening process using a button breaker to mechanically soften a nonwoven sheet. The button breaker employs knobbed rolls which turn at a different speed to, or even in the opposite direction to the movement of the nonwoven sheet as it travels over them, creating a rubbing effect.

US 5,966,785 and US 6,195,854 report a mechanical softening process where the nonwoven sheet is passed through the nip of a knobbed roll against a soft rubber backup roll. However, no information is given in these documents on how this process impacts the barrier properties of the nonwoven sheet.

US 7,296,328 discloses a process for the softening of a nonwoven sheet in which with increasing softening cycles, the sheet shows an increase in breathability. The described softening process employs a rubbing effect using a speed difference between the nonwoven sheet and the roller or mechanical object over which it passes. However, since the nonwoven sheet is exposed to a rubbing surface, its surface is damaged.

US 3,920,874 and US 3,811,979 describe a process employing pairs of rolls covered with square edged cylindrical pins which interlock for the softening of a nonwoven sheet passed between them, with the softening rollers moving at the same surface speed as the nonwoven sheet. The nonwoven sheet is required to have an elongation of at least 10 % for the process to work correctly.

WO 2020/026062 A1 describes a process that includes a type of mechanical softening of a nonwoven sheet known as relofting. The term "relofting" denotes a post-processing step that increases the loft (i.e., lowers the solidity) of a bonded nonwoven sheet. The nonwoven sheets are made from melt spun or melt blown fibers and are potentially charged. According to the document, relofting reduces the pressure drop of a nonwoven sheet while having a negligible effect on its filtration efficiency when the nonwoven sheet has a solidity of below 8%, but when the nonwoven sheet has a solidity of 10 % or higher, relofting causes the filtration efficiency to decrease significantly. Therefore, the process described in this document is limited to open structures designed for filtration and cannot be used for structures having a high solidity that require good liquid barrier properties.

WO 2015/195898 A1 relates to flash-spun plexifilamentary sheets or fabrics suited for home wrap or protective apparel applications.

An ideal nonwoven sheet for use in protective apparel should have high barrier properties to ensure the protection of the wearer against external contaminants, have high flux to allow rapid exhaust of warm air and water vapor from within the protective apparel, and maintain a comfortable environment for the wearer, while having adequate mechanical properties to withstand the rigors of physical work. An ideal nonwoven sheet for use in roof lining applications should have a high tensile strength, high nail tear resistance, be resistant to liquid penetration while providing moisture vapor transport, and have a sufficient surface robustness that the roof lining product remains intact during mounting.

It is also preferable that the nonwoven sheet has low stiffness and a soft texture so that it does not provide noticeable resistance to the wearer's movements or generate excessive noise due to wind movement. While flash-spun sheets have demonstrated a good variety of desired properties, there has been a trade-off required between the desired barrier, breathability, and mechanical properties. Therefore, there is a need for flash-spun sheets for use in protective apparel or construction applications, such as roof lining or house wrap applications, that provide improved surface robustness and nail tear resistance of the nonwoven sheet as well as breathability and comfort for the wearer, without sacrificing barrier properties and protection, or creating too much noise in use.

## SUMMARY OF THE INVENTION

In one embodiment, the invention is directed to a thermally bonded sheet of nonwoven flash-spun plexifilamentary fibrils, the sheet having

(a) a basis weight from 55 g/m$^2$ to 90 g/m$^2$,
(b) a particle filtration efficiency of 99.5 % or more,
(c) a hydrostatic head of 180 cmH$_2$O or more, and
(d) a Moisture Vapor Transmission Rate of 2000 g/m$^2$/day or more.

In a further embodiment, the invention is directed to a process for the preparation of a sheet of nonwoven flash-spun plexifilamentary fibrils which comprises the steps of:

(i) generating a spin fluid comprising

(a) from 8 to 11.5 weight percent of a polymer, based on the total amount of the spin fluid, and
(b) a spin agent comprising a chlorine-containing solvent, selected from dichloromethane, cis-1,2-dichloroethylene and trans-1,2-dichloroethylene, in combination with a fluorine-containing solvent,

(ii) flash spinning the spin fluid at a temperature of above 205°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

## DETAILED DESCRIPTION

### Definitions of Terms and Test methods

Before addressing details of embodiments, some terms and test methods are defined or clarified. Unless otherwise mentioned, all tests were carried out without pre-conditioning of the samples. When average values are indicated herein, this refers to the arithmetic average.

Basis weight is determined according to EN ISO 536 (1996) & EN 1849-2 (2009) using a sample size of 100 cm$^2$ and is reported in gram per square meter (g/m$^2$). The reported value represents an average of at least 12 individual measurements.

Gurley Hill porosity (sometimes also referred to as "Gurley Porosity") is a measure of the permeability of the sheet for gaseous materials. In particular, it is a measure of how long it takes a volume of gas to pass through an area of the sheet wherein a certain pressure gradient exists. Gurley-Hill porosity is determined in accordance with TAPPI T-460 OM-88 (2006) using a Lorentzen & Wettre Model SE 166 or 516 from Lorentzen & Wettre, Kista, Sweden. This test method measures the time required for 100 cubic centimeters (cm$^3$) of air to be pushed through a 28.7 mm diameter sample having an area of 6.54 cm$^2$ (one square inch) under a pressure of approximately 1.21 kPa (4.9 inches) of water. The Gurley Hill porosity reported herein is expressed in seconds and represents an average of at least twelve individual measurements. The reported value represents an average of at least 12 individual measurements. The lower the Gurley Hill porosity, the greater the air permeability of the sheet.

Particle filtration efficiency (PFE) is a measure of the relative amount, expressed in percent, of particulates which are retained by a material at given conditions and particle penetration is a measure of the relative amount, expressed in percent, of particulates which pass through a material at given conditions. Particle filtration efficiency (PFE) is determined by measuring the particle penetration and is calculated as 100 % minus the particle penetration. Herein particle penetration is measured on the TSI 8130 equipment form TSI Incorporated, Shoreview, MN, United States. The TSI 8310 is an equipment used for measurement according to US 42 CF 84 (2004), NIOSH Procedures No. RCT-APR-STP-57, 58, and 59. For determining the particle filtration efficacy of the bonded sheet described herein, the TSI 8130 equipment is used with a sodium chloride particle generation at a flow rate of 2.3 liter per minute. The sodium chloride particle distribution has a count median diameter of 0.075 $\mu$m, a mass mean diameter of 0.3 $\mu$m, and a geometrical standard deviation of 1.8. A volumetric flow rate of 2.3 L/min corresponds to a face velocity of 0.4 cm/s, which is representative of typical air flow conditions that the bonded sheet faces when used in a protective garment. In order to achieve a flow rate of 2.3 liter per minute, the control valve is closed and the air flow results from the air through the downstream photometer only. Measurements are performed with a rise time of 25 seconds and a measurement time of 4 seconds. The particle penetration in percent is measured based on the difference in light intensity by an upstream and downstream photometer. The pressure drop over the sample is recorded in mm of water column. The maximum pressure of the TSI 8130 equipment is 110 mm of water column. The particle penetration and the particle filtration efficiency reported herein is an average of at least 12 measurements.

The particle penetration is additionally expressed as the logarithmic reduction value (LRV) based on the following formula

$$LRV = -\log_{10}(penetration[\%]/100)$$

A higher LRV and PFE represent a higher particle barrier of the tested material.

Handle-o-meter stiffness is a measure of the resistance of a sample to being pressed into a 10mm slot by a blade attached to a 100g penetrator beam that is motor driven. It is measured by ASTM 6828 (2002) - Stiffness of Fabric by Blade/Slot Procedure and is expressed in gram-force (gf), convertible to N by multiplying gf by 9.8067 and dividing by 1000. A lower Handle-o-meter stiffness value refers to a softer sheet.

The hydrostatic head is a measure of the resistance of a sheet to penetration by liquid water under a static load. Herein the hydrostatic head is determined based on AATCC 127 (2018). The hydrostatic head is reported in cm of water column. The hydrostatic head is measured on a FX 3000 HydroTester III from TexTest AG, Schwerzenbach, Switzerland. Water in contact with one side of a 102.6 cm$^2$ section of a sample is pressurized at a rate of 60 +/- 3 cmH$_2$O/min until three areas of the sample are penetrated by the water. The reported hydrostatic head is the average of at least 6 individual measurements. A higher hydrostatic head value refers to a sheet having a higher resistance to water penetration, that is having a lower water permeability. For a laminated product, the surface of the sheet with the barrier function is the surface in contact with the water for measurement.

The moisture vapor transmission rate (MVTR) is measured according to EN ISO 12572 (2001), "Hygrothermal performance of building materials and products, Climate C", using a Gintronic Gravitest 6400 with an ES 420A balance from MRS Seitter, Lenning-Brück, Germany. The following settings are applied. The measurement is performed at 23°C with a relative humidity of 100 % in the cups, and an air flow above the samples of test material of 2.5 m/s at a relative humidity of 50 %, and using a measurement interval of 30 minutes. A method using multiple layers of the test material is used to eliminate the impacts of the air layer above the water in each cup and of the boundary layer above each sample of test material.

Five test cups are each filled with water to a height of 15 mm from the top. Two of the test cups are then closed using one layer of test material, one of the test cups is closed using two layers of test material, and the two remaining test cups are closed with three layers of test material. The test is then performed with the five test cups in the same instrument at the same time. The weights of the test cups are monitored until the rate of weight loss from each test cup stabilizes to within +/-5 % during 5 successive measurements. The rate of weight loss is then divided by the upper cross-sectional area of the test cup through which water vapor has diffused to give a water vapor transmission rate per cup (WDD in g/m$^2$/day), and the total resistance to the water vapor diffusion (Sd, in cm of equivalent air layer thickness) for each cup is calculated using the formula:

$$Sd = 2366/WDD$$

The Sd values for each cup are then plotted against the number of layers of test material used for that cup and the slope of a line through the points is determined by linear regression. This slope (SDML) represents the incremental increase in water vapor diffusion resistance created by adding one layer of test material. This is then converted back to a moisture vapor transmission rate for one layer of test material by performing the reverse calculation:

$$MVTR = 2366/SDML$$

The reported value is for one measurement, which inherently averages the property for ten individual samples of test material.

The Ret (resistance to evaporative heat loss through the sample) is a measure of the breathability of a fabric, with lower values corresponding to higher breathability. The Ret is measured according to EN 31092 / ISO 11092 and expressed in m$^2$Pa/W. The Hohenstein Comfort Rating System indicates that breathable fabrics have Ret values below 30 m$^2$ Pa/W, very breathable fabrics have Ret values below 13 m$^2$Pa/W, and extremely breathable fabrics have Ret values of below 6 m$^2$Pa/W.

Surface robustness as described herein is measured according to ASTM F2252M (2018) "Standard practice for evaluating ink or coating adhesion to flexible packaging materials using tape." The ASTM standard practice is designed to assess the extent to which the surface of a flexible packaging material is damaged by the application and removal of tape. In this case, no ink or coating is present, but the same approach is used to evaluate the bonding of the surface layers of fibrils to the underlaying nonwoven sheet. In the measurement method described herein, the surface of the sheet bonded by embossing using a linen pattern is tested, if present. The following modifications to the standard practice are applied: i) specimens are tested without pre-conditioning, and ii) no cross-hatch or X-cuts are made in the specimens prior to testing.

The tape used for the test is DuPont™ Tyvek® Acrylic Tape 2060B available from DuPont. This tape has a width of 75mm and provides a peel force from a Tyvek® surface of about 25 N/25mm. After applying the tape to the specimen, the circular end of a 60 mm diameter cylindrical weight having a mass of 2 kg is positioned centrally on the portion of the tape which is adhered to the specimen and left in place for 1 minute to ensure uniform and intimate contact between the adhesive on the tape and the specimen. The weight is then removed before the peel test is performed.

A specimen is determined to have failed the peel test if any of the following defects appear in the area from which the tape was peeled:

- Any material from the surface of the specimen visible on the tape or any areas of the surface of the specimen which have become detached from the specimen, and that have a dimension greater than 5 mm as measured using a vernier caliper.
- Raised or loose fibres (or in the case of laminated structures, regions of the topmost layer of the laminate), which become partly detached from the specimen, which are visible, or which can be moved or disturbed by gentle pressure with tweezers, having a dimension greater than 5 mm as measured using a vernier caliper.
- Any cracks formed in the surface of the specimen having a dimension greater than 5 mm as measured using a vernier caliper.

Detection of smaller defects is facilitated by observing the specimen at a shallow angle and/or by passing a fingertip lightly over the surface to check for raised or mobile areas. Traces of adhesive transferred to the specimen from the tape are not considered as defects. A minimum of 12 specimens are tested and the percentage of specimens free of defects is reported. As an example, if 10 of 12 tested specimens are free of defects, the pass rate would be 83.3 %.

Nail tear resistance is tested according to EN12310-1 (1999), "Flexible sheets for waterproofing - Part 1: Bitumen sheets for waterproofing - Determination of resistance to tearing (nail shank)", modified for sample preparation before testing as per EN13859-1 (2010) and EN13859-2 (2010). It measures the resistance of a material to tearing when stretched near a nail hole. The gauge length between the clamp and the nail is 11 cm and the test speed is 10 cm/min. The result is the maximum force measured. Nail tear resistance is reported as the average of the nail tear resistance in the machine direction (MD) of the sheet and of the nail tear resistance in the cross direction (XD) of the sheet. The reported nail tear is the average of at least 6 individual measurements in machine or cross direction.

BET surface area is measured by the BET nitrogen absorption method of S. Brunauer, P. H. Emmett and E. Teller, J. Am. Chem. Soc., V. 60 p 309-319 (1938) based on 5 equidistant relative pressures between 0.1 to 0.25 and is reported as $m^2/g$. The samples measured have a total surface area above 2 $m^2$. BET surface area is measured using a Quantachrome model NOVA 3000e from Quantachrome GmbH, Odelzhausen, Germany. Performance of the equipment is verified by using a standard aluminum oxide sample (3P-SRF586) having a BET surface area of 5.86 +/- 0.23 $m^2$/gram supplied by 3P Instruments GmbH & Co, Odelzhausen, Germany. Before measurement, the samples are dried for at least 2 hours at a temperature of 60°C under vacuum on equipment Degasser MasterPrep from Quantachrome GmbH, Odelzhausen, Germany. The BET surface area reported herein is based on 1 or 2 measurements.

The trapezoidal tear strength (also referred to as trapezoid tearing strength) is a measure of the tear resistance of a fabric. The trapezoidal tear strength is measured according to EN ISO 9073-4 (1997) and is expressed in newton (N). The average trapezoidal tear strength is reported as the average of the trapezoidal tear strength in the machine direction (MD) of the sheet and of the trapezoidal tear strength in the cross direction (XD) of the sheet. The reported trapezoidal tear in either direction is an average of at least 12 measurements. The trapezoidal tear strength of a sample tends to increase proportionally with basis weight. Thus, the trapezoidal tear strength can be normalized by dividing it by the actual basis weight.

Tensile strength is a measure of the breaking strength of a fabric when subjected to unidirectional stress. Tensile strength is determined by EN ISO 13934-1 (1999) "Textiles - Tensile properties of fabrics - Part 1: Determination of maximum force and elongation at maximum force using the strip method", using a 200 mm gauge length between the jaws of the tensilometer and a test speed of 100 mm/min. Results are reported in newtons (per 50 mm sample width). Separate measurements are carried out with tension applied in the machine direction (MD) and in the cross direction (XD) for the material being tested, and the average of the MD and XD values is reported herein. The tensile strength reported herein is an average of at least 12 measurements in the machine direction (MD), and an average of at least 6 measurements in the cross direction (XD).

The hardness of the rubber is determined based on DIN ISO 7619-1 (2010) - Rubber, vulcanized or thermoplastic - Determination of indentation hardness - Part 1: Durometer method (Shore hardness). The hardness is reported in Shore A.

The resistance to chemical permeation is measured according to EN ISO 6529 (2001) "Protective clothing. Protection against chemicals. Determination of resistance of protective clothing materials to permeation by liquids and gases," using 18 wt% sulphuric acid, 30 wt% sulphuric acid, and/or 40 wt% sodium hydroxide solutions as test liquids. A 112 mm diameter specimen of the fabric to be tested is clamped between two chambers of a test cell, each chamber having a volume of 100 $cm^3$, such that the specimen forms a barrier between the two chambers. One chamber, equipped with a conductivity meter, is filled with deionized water and is stirred constantly using a magnetic stirrer. At the start of the test, the other chamber is filled with the test liquid and the conductivity of the deionized water is then recorded every minute for up to 480 minutes. An increase in the conductivity of the deionized water indicates that test liquid has permeated through the specimen, and the degree of increase can be correlated with a specific amount of permeate. The specimen is determined to fail when the permeation rate exceeds 1.0 $\mu g/cm^2$/min and the time to failure is recorded in minutes. A fabric suitable for use in manufacturing chemical protective apparel should not fail within 120 minutes (2 hours), or within 240 minutes (4 hours), or within 480 minutes (8 hours), depending on the usage class of the chemical protective apparel. Results reported are the average of at least three measurements.

The surface resistivity is determined in accordance with EN 1149-1 (2006) on samples conditioned at 23°C and 25% relative humidity for 24 hours. According to the requirement of EN 1149-5 (2008), a surface resistivity of 2.5 x $10^9$ $\Omega$ or less is desirable to provide adequate protection against electrostatic discharge in fabrics used for making protective garments. The surface resistivity is the average of at least six measurements on the same side of the fabric.

Optical density is the $\log_{10}$ of the ratio of the intensities of incident and transmitted light passing through a sample. It is measured in accordance with ANSI PH2.1986 using an X-Rite 361T Tabletop Transmission Densitometer, from X-Rite Europe GmbH, Regensdorf, Switzerland, which measures a circular field of view of approximately a 5-mm diameter. Reported values are the average of twelve measurements.

Emissivity is a dimensionless property which describes the heat absorbance and reflectance characteristics of a surface. It is measured in accordance with ASTM Standard C1371-04a (2010) using a Model AE D&S Emissometer from Devices and Services Co., Dallas, Texas, USA. Reported values are the average of twelve measurements.

The total crystallinity index is determined as follows. A diffractometer in reflection $\theta$-$2\theta$ Bragg-Brentano geometry (http://prism.mit.edu/xray/oldsite/Basics%20of%20X-Ray%20Powder%20Diffraction.pdf) is fitted with a Cu-K$_\alpha$ x-ray

tube source with wavelength of 1.54 Å and a 1-dimensional detector. A parabolic mirror with a 1/16° fixed slit and 20mm mask is used to create a parallel incident x-ray beam while a fixed slit of 1/8°, Soller slits of 0.04 rad and a nickel Cu-K$_\beta$ filter are employed on the diffracted side before the detector. Each sample is 32 mm in diameter and is mounted onto low background, flat silicon wafer holders. The sample holder is mounted horizontally at the center of the diffractometer and normal to the scattering vector. During the measurement, the sample rotates in this plane.

The method used for the determination of the total crystallinity index is based on the ratio of the scattering intensity of the crystalline regions to the total intensity as described in S.L. Aggarwal, G.P. Tilley, Determination of crystallinity in polyethylene by X-Ray diffractometer, Journal of Polymer Science, Vol. 18, pp. 17-26, 1955. The analysis reported in this publication only considers the case in which the orthorhombic phase is present. Polyethylene can also crystallize in the monoclinic phase. In the current case, the procedure as described below is used to determine the crystallinity of the polyethylene samples using MATLAB. The scattering angle 2θ of the orthorhombic and monoclinic peaks can vary by about +/- .15° due to instrumental differences, sample height/texture and material nature.

1. Data are shifted on the 2θ axis such that the maximum intensity of the orthorhombic 110 peak occurs at 21.55°. Sample height variations can cause this shift in 2θ.
2. A local linear background, drawn from 2θ = 13±0.5° to 28±0.5° in scattering angle, is subtracted.
3. The amorphous portion of the pattern is fitted using two Gaussian peaks which are required to touch the data points in the ranges of [15.0° to 18.65°], [22.65° to 22.75°], and [25.2° to 28°] 2θ and which are centered around 18.1° and 21.6° 2θ, with peak full widths at half maximum (FWHM) of 4°-5° to give a total integrated intensity I$_{amorphous}$.
4. The total amorphous portion is then subtracted from the full pattern.
5. The remaining intensity is assumed to be crystalline in nature, belonging to the orthorhombic or monoclinic phases, and is fitted with the following peaks having respective integrated intensities:

1) Orthorhombic 110 peak: 21.55°, Pearson VII peak shape, I$_{110,O}$.
2) Orthorhombic 200 peak: 23.8°, Pearson VII peak shape, I$_{200,O}$.
3) Additional peak to fit asymmetry of the orthorhombic 110 peak: 21.0°, Pearson VII peak shape. I$_{110,A}$. The subscript "A" stands for asymmetric.
4) Monoclinic 010 peak: 19.5°, Pearson VII peak shape, I$_{010,M}$.
5) Monoclinic 200 peak: 23.1°, Pearson VII peak shape I$_{200,M}$.

Typical Peak FWHMs vary between 0.5° and 1°. Pearson VII M-values are allowed to vary from 1-100, but typically fall around 5 for each peak. If no monoclinic peak is visible at 19.5°, then both monoclinic peaks are set to zero intensity. Peak positions and widths are allowed to vary slightly to obtain a good fit.

6. The total crystallinity index is calculated from the ratio of crystalline scattering to total scattering. The crystalline scattering is defined as the sum of the integrated intensities from the crystalline peaks (monoclinic and orthorhombic). The total scattering is defined as the sum of the integrated intensity of crystalline and amorphous peaks:

$$\text{crystallinity index}=CI= \frac{I_{110,O} + I_{200,O} + I_{110,A} + I_{010,M} + I_{200,M}}{I_{110,O} + I_{200,O} + I_{110,A} + I_{010,M} + I_{200,M} + I_{amorphous}}$$

Accordingly, the partial crystallinity indices $CI_{orthorhombic}$ and $CI_{monoclinic}$ are calculated respectively from these expressions

$$CI_{orthorhombic}= \frac{I_{110,O} + I_{200,O} + I_{110,A}}{I_{110,O} + I_{200,O} + I_{110,A} + I_{010,M} + I_{200,M} + I_{amorphous}}$$

$$CI_{monoclinic}= \frac{I_{010,M} + I_{200,M}}{I_{110,O} + I_{200,O} + I_{110,A} + I_{010,M} + I_{200,M} + I_{amorphous}}$$

Melting temperature is determined by differential scanning calorimetry, following the guidance provided in ASTM D3418 (Standard Test Method for Transition Temperatures and Enthalpies of Fusion and Crystallization of Polymers by Differential Scanning Calorimetry) and ASTM Standard F2625 (Standard Test Method for Measurement of Enthalpy of Fusion, Percent Crystallinity and Melting Point of Ultra-High-Molecular weight polyethylene by means of differential scanning calorimetry). For polyethylene, heating and cooling is performed under inert gas at a rate of 10°C/minute, heating the sample first from room temperature to 210°C, then cooling the sample back to room temperature and subsequently heating the sample a second time to 210°C. The melting point reported herein is the peak temperature of the endotherm of the second heating cycle. For polypropylene the same procedure applies - where the maximum temperature is 230°C.

The melt flow rate is determined according to the method described in ISO 1133 (Plastics - Determination of the melt mass-flow rate (MFR) and the melt volume-flow rate (MVR) of thermoplastics). The melt flow rate for polyethylene is determined under condition "D" at a temperature of 190°C and using a mass of 2160 grams. The melt flow rates of other polyolefins are performed at different temperatures as specified in ISO 1133.

Density is determined according to the method described in ISO 1183 (Plastics - Methods for determining the density of non-cellular plastics).

The term "polymer" is intended to embrace, without limitation, homopolymers, copolymers (such as for example, block, graft, random, and alternating copolymers), terpolymers, etc., and blends and modifications thereof. Furthermore, unless otherwise specifically limited, the term "polymer" shall include all possible geometrical configurations of the material. These configurations include, but are not limited to, isotactic, syndiotactic, and random symmetries.

The term "polyethylene" is intended to embrace not only homopolymers of ethylene, but also copolymers and terpolymers wherein at least 85 % of the recurring units are ethylene units. One useful polyethylene is high-density polyethylene which has a melting temperature of about 123°C to about 140°C, a density in the range from 0.94 to 0.98 grams per cubic centimeter, and a melt flow rate (ISO 1133 condition D, 190°C/2160 grams) of between 0.1 g/10min and 100 g/10min, preferably less than 4 g/10min.

The term "polypropylene" is intended to embrace not only homopolymers of propylene but also copolymers and terpolymers where at least 85 % of the recurring units are propylene units. Furthermore, unless otherwise specifically limited, the term "polypropylene" shall include all possible geometrical configurations of the material. These configurations include, but are not limited to, isotactic, syndiotactic, and random symmetries.

The term "polymer type" refers to the chemical class into which the polymer falls, for example, polyethylene, polypropylene, etc.

The term "plexifilamentary" refers to a three-dimensional integral network or web of a multitude of thin, ribbon-like, fibrils of random length and a median fibril width of less than about 25 microns. In plexifilamentary structures, the fibrils are generally coextensively aligned with the longitudinal axis of the structure, and they intermittently unite and separate at irregular intervals in various places throughout the length, width, and thickness of the structure to form a continuous three-dimensional network or web.

The terms "spin agent" or "spin agent composition" refers to a composition comprising one or more solvents and any additives that are used to initially dissolve the polymer(s) to form the spin fluid. Suitable additives include stabilizers, such as antioxidants or acid scavengers.

The term "spin fluid" refers to a solution for spinning in a flash spinning process comprising a polymer and a spin agent. The solution may also include one or more additives.

The term "cloud point pressure" refers to the pressure at which, at constant temperature, a clear single phase spin fluid transitions from a clear solution to a cloudy, two-phase dispersion. At the cloud point pressure, a clear spin fluid becomes turbid.

Atmospheric pressure means 101.325 kPa. Essentially atmospheric pressure means 101.325 kPa $\pm$ 5 %.

As used herein, the singular forms "a," "an," and "the" include the plural, and reference to a particular numerical value includes at least that particular value, unless the context clearly dictates otherwise. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable.

**Bonded Sheet of Nonwoven Flash-spun Plexifilamentary Fibrils**

Provided herein is a thermally bonded sheet of nonwoven flash-spun plexifilamentary fibrils, the sheet having

(a) a basis weight from 55 g/m$^2$ to 90 g/m$^2$,
(b) a particle filtration efficiency of 99.5 % or more,
(c) a hydrostatic head of 180 cmH$_2$O or more, and
(d) a moisture vapor transmission rate of 2000 g/m$^2$/day or more.

The thermally bonded sheet of moderate to high basis weight described herein exhibits a desired combination of high particle filtration efficiency, high hydrostatic head, and moderate to high MVTR. Moreover, the thermally bonded sheet described herein has good physical properties, such as trapezoidal tear strength and nail tear resistance.

In some embodiments, the bonded sheet has a basis weight from 55 g/m$^2$ to about 65 g/m$^2$, in other embodiments, the bonded sheet has a basis weight from about 70 g/m$^2$ to 90 g/m$^2$, and in other embodiments, the bonded sheet has a basis weight from about 75 to 90 g/m$^2$. Such bonded sheets are particularly suitable for protective apparel applications, without being limited thereto.

In some embodiments, the bonded sheet has a basis weight from about 65 $g/m^2$ to 90 $g/m^2$, in other embodiments, the bonded sheet has a basis weight from about 70 $g/m^2$ to 90 $g/m^2$, and in other embodiments, in other embodiments, the bonded sheet has a basis weight from about 65 $g/m^2$ to about 85 $g/m^2$. Such bonded sheets are particularly suitable for roof lining applications, without being limited thereto.

In some embodiments, the bonded sheet has a moisture vapor transmission rate (MVTR) of about 2500 $g/m^2$/day or more, and in other embodiments, the bonded sheet has a MVTR of about 3200 $g/m^2$/day to about 10,000 $g/m^2$/day. In some embodiments, the bonded sheet has a MVTR from about 3500 $g/m^2$/day to about 10,000 $g/m^2$/day, and in other embodiments, the bonded sheet has a MVTR from about 3500 $g/m^2$/day to about 9000 $g/m^2$/day.

In some embodiments, the bonded sheet has a Gurley Hill porosity from 10 seconds to 110 seconds, and in other embodiments, the bonded sheet has a Gurley Hill porosity from about 30 seconds to about 100 seconds.

In some embodiments, the bonded sheet has a particle filtration efficiency from 99.50 % to about 99.99 %, in other embodiments, the bonded sheet has a particle filtration efficiency from 99.50 % to about 99.95 %, and in other embodiments, the bonded sheet has a particle filtration efficiency from about 99.80 % to about 99.99%.

In some embodiments, the bonded sheet has a hydrostatic head of about 190 $cmH_2O$ or above, in other embodiments, the bonded sheet has a hydrostatic head from about 200 $cmH_2O$ or above, and in other embodiments, the bonded sheet has a hydrostatic head from about 200 $cmH_2O$ to about 350 $cmH_2O$.

In some embodiments, the bonded sheet has a Ret (resistance to evaporative heat loss through the sample) of 23 $m^2Pa/W$ or less, in other embodiments, the bonded sheet has a Ret of about 4 $m^2Pa/W$ or more, in other embodiments, the bonded sheet has a Ret of about 4 $m^2Pa/W$ to about 19 $m^2Pa/W$, and in other embodiments, the bonded sheet has a Ret of about 5 $m^2Pa/W$ to about 15 $m^2pa/W$.

In some embodiments, the bonded sheet has a surface robustness with a pass rate of at least 80 %, in other embodiments, the bonded sheet has a surface robustness with a pass rate of at least about 85 %, in other embodiments, the bonded sheet has a surface robustness with a pass rate of at least about 90 %, and in other embodiments, the bonded sheet has a surface robustness with a pass rate of at least about 95 %. In some embodiments, the bonded sheet has a surface robustness with a pass rate from about 95 % about 100 %.

In some embodiments, the bonded sheet has a BET surface area from 4 $m^2/g$ to 8 $m^2/g$, in other embodiments, the bonded sheet has a BET surface area from 4 $m^2/g$ to about 7 $m^2/g$, and in other embodiments, the bonded sheet has a BET surface area from about 5 $m^2/g$ to about 7 $m^2/g$.

In some embodiments, the bonded sheet has a handle-o-meter stiffness from 0.3 N to 1.5 N, in other embodiments, the bonded sheet has a handle-o-meter stiffness from about 0.4 N to about 1.4 N, and in other embodiments, the bonded sheet has a handle-o-meter stiffness from about 0.5 N to about 1.2 N.

In some embodiments, the bonded sheet has an average trapezoidal tear strength from 25 N to 60 N, in other embodiments, the bonded sheet has a trapezoidal tear strength from 25 N to about 50 N, and in other embodiments, the bonded sheet has a trapezoidal tear strength from about 40 N to 60 N. In some embodiments, the bonded sheet has a trapezoidal tear strength in the machine direction (MD) which is about 80 % to about 120 % of the trapezoidal tear strength in the transverse direction (XD).

In some embodiments, the bonded sheet has an average nail tear resistance from 45 N to 110 N, in other embodiments, the bonded sheet has a nail tear resistance from 45 N to about 85 N, and in other embodiments, the bonded sheet has a nail tear resistance from about 70 N to 110 N. In some embodiments, the bonded sheet has a nail tear resistance in the machine direction (MD) which is about 80 % to about 120 % of the nail tear in the transverse direction (XD).

In some embodiments, the bonded sheet has an average tensile strength from about 90 N to about 250 N, in other embodiments, the thermally bonded sheet has an average tensile strength from about 100 N to about 180 N, and in other embodiments, the thermally bonded sheet has an average tensile strength from about 120 N to about 250 N. In some embodiments, the bonded sheet has a tensile strength in at least one direction, selected from the machine direction (MD) and the transverse direction (XD), from about 100 N to about 250 N, in other embodiments, the bonded sheet has a tensile strength in at least one direction, selected from the machine direction (MD) and the transverse direction (XD), from about 100 N to about 180 N, and in other embodiments, from about 120 N to about 250 N. In some embodiments, the bonded sheet has a tensile strength in the machine direction (MD) which is about 60 % to about 140 % of the tensile strength in the transverse direction (XD), in other embodiments, the bonded sheet has a tensile strength in the machine direction (MD) which is about 70 % to about 130 % of the tensile strength in the transverse direction (XD), in other embodiments, the bonded sheet has a tensile strength in the machine direction (MD) which is about 80 % to about 120 % of the tensile strength in the transverse direction (XD), and in other embodiments, the bonded sheet has a tensile strength in the machine direction (MD) which is about 90 % to about 110 % or about 95 % to about 105 % of the tensile strength in the transverse direction (XD).

In some embodiments, the bonded sheet has a resistance to chemical permeation measured according to EN ISO 6529 (2001) against 18 wt% sulphuric acid of 120 min or above, in other embodiments, the bonded sheet has a resistance to chemical permeation measured according to ISO 6529 against 18 wt% sulphuric acid of 240 min or above, and in other embodiments, the bonded sheet has a resistance to chemical permeation measured according to ISO 6529 against 18 wt% sulphuric acid of above 480 min. In some embodiments, the bonded sheet has a resistance to chemical permeation measured according to EN ISO 6529 (2001) against 30 wt% sulphuric acid of 120 min or above, in other embodiments, the bonded sheet has a resistance to chemical permeation measured according to ISO 6529 against 30 wt% sulphuric acid of 240 min or above, and in other embodiments, the bonded sheet has a resistance to chemical permeation measured according to ISO 6529 against 30 wt% sulphuric acid of above 480 min. In some embodiments, the bonded sheet has a resistance to chemical permeation measured according to ISO 6529 against 40 wt% sodium hydroxide of 120 min or above, in other embodiments, the bonded sheet has a resistance to chemical permeation measured according to ISO 6529 against 40 wt% sodium hydroxide of 240 min or above, and in other embodiments, the bonded sheet has a resistance to chemical permeation measured according to ISO 6529 against 40 wt% sodium hydroxide of above 480 min.

In some embodiments, the bonded sheet has a resistance to chemical permeation measured according to ISO 6529 against 18 wt% sulphuric acid and 40 wt% sodium hydroxide of 120 min or above, in other embodiments, the bonded sheet has a resistance to chemical permeation measured according to ISO 6529 against 18 wt% sulphuric acid and 40 wt% sodium hydroxide of above 240 min, and in other embodiments, the bonded sheet has a resistance to chemical permeation measured according to ISO 6529 against 18 wt% sulphuric acid and 40 wt% sodium hydroxide of above 480 min.

In some embodiments, the bonded sheet has a resistance to chemical permeation measured according to ISO 6529 against 30 wt% sulphuric acid and 40 wt% sodium hydroxide of 120 min or above, in other embodiments, the bonded sheet has a resistance to chemical permeation measured according to ISO 6529 against 30 wt% sulphuric acid and 40 wt% sodium hydroxide of above 240 min, and in other embodiments, the bonded sheet has a resistance to chemical permeation measured according to ISO 6529 against 30 wt% sulphuric acid and 40 wt% sodium hydroxide of above 480 min.

In some embodiments, the bonded sheet has a total crystallinity index of less than about 74 %, and in other embodiments, the bonded sheet has a total crystallinity index from about 64 % to about 74 % In some embodiments, the total crystallinity index may have a contribution from the orthorhombic and the monoclinic crystalline phase.

In some embodiments, the bonded sheet has a surface resistivity below $2.5 \times 10^9 \ \Omega$, and in other embodiments, the bonded sheet has a surface resistivity below $2.0 \times 10^9 \ \Omega$.

In some embodiments, the bonded sheet has at least one metallized surface. In some embodiments, the surface of the sheet that is metallized has an emissivity from 0.05 to 0.25 and an optical density above 2.0, and in other embodiments, the surface of the bonded sheet that is metallized has an emissivity from 0.05 to 0.2 and an optical density above 2.2.

In some embodiments, the flash-spun plexifilamentary fibrils of the bonded sheet are comprised of a polyolefin. In some embodiments, the polyolefin is selected from polyethylene (PE), polypropylene (PP), and blends/mixtures thereof. Particularly preferred polyolefins are polyethylene (PE), in particular high-density polyethylene (HDPE), and blends/-mixtures of high-density polyethylene (HDPE) and low-density polyethylene (LDPE) or blends/mixtures of high-density polyethylene (HDPE) and linear low-density polyethylene (LLDPE). In some embodiments, the polyolefin comprises at least 80 weight percent of high-density polyethylene (HDPE), based on the total amount of polymer. In other embodiments, the polyolefin comprises at least 90 weight percent of high-density polyethylene (HDPE), based on the total amount of polymer, and in other embodiments, the polyolefin comprises at least 95 weight percent of high-density polyethylene (HDPE), based on the total amount of polymer.

In some embodiments, the flash-spun plexifilamentary fibrils of the bonded sheet are comprised of a high-density polyethylene, and the sheet has a basis weight from 55 $g/m^2$ to 90 $g/m^2$, a Gurley Hill porosity from 10 seconds to 105 seconds, a particle filtration efficiency from 99.5 % to about 99.99 %, a MVTR of 2000 $g/m^2$/day to about 9000 $g/m^2$/day, and a hydrostatic head of 180 $cmH_2O$ or above.

In some embodiments, the flash-spun plexifilamentary fibrils of the bonded sheet are comprised of a high-density polyethylene, and the sheet has a basis weight from 55 $g/m^2$ to 90 $g/m^2$, a trapezoidal tear from 25 N to 60 N, a particle filtration efficiency from 99.5 % to about 99.99 %, a Gurley Hill porosity from 10 seconds to 105 seconds a MVTR of 2000 $g/m^2$/day to about 9000 $g/m^2$/day, a hydrostatic head of 180 $cmH_2O$ or above, and a resistance to chemical permeation measured according to ISO 6529 against 18 wt% sulphuric acid and 40 wt% sodium hydroxide of above 240 min. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from 55 $g/m^2$ to about 65 $g/m^2$, a trapezoidal tear from 25 N to 50 N, a Gurley Hill porosity from 10 seconds to 105 seconds, a MVTR of about 3000 $g/m^2$/day to about 9000 $g/m^2$/day, a particle filtration efficiency from 99.5 % to about 99.99 %, a hydrostatic head of 180 $cmH_2O$ or above, and a resistance to chemical permeation measured according to ISO 6529 against 18 wt% sulphuric acid and 40 wt% sodium hydroxide of above 240 min. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from about 75 $g/m^2$ to 90 $g/m^2$, a trapezoidal tear from 40 N to 60 N, a Gurley Hill porosity from about 30 seconds to 105 seconds, a MVTR of about 2000 $g/m^2$/day to about 5000 $g/m^2$/day, a particle

filtration efficiency from about 99.5 % to about 99.99 %, a hydrostatic head of about 230 cmH$_2$O or above, and a resistance to chemical permeation measured according to ISO 6529 against 18 wt% sulphuric acid and 40 wt% sodium hydroxide of above 240 min. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from 55 g/m$^2$ to 90 g/m$^2$, a trapezoidal tear from 25 N to 60 N, a Gurley Hill porosity from 10 seconds to 105 seconds, a MVTR of 2000 g/m$^2$/day to about 9000 g/m$^2$/day, a particle filtration efficiency from 99.5 % to about 99.99 %, a hydrostatic head of 180 cmH$_2$O or above, a resistance to chemical permeation measured according to ISO 6529 against 18 wt% sulphuric acid and 40 wt% sodium hydroxide of 120 min or above, and a surface resistivity below 2.5 x 10$^9$ Ω. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from 55 g/m$^2$ to about 65 g/m$^2$, a trapezoidal tear from 25 N to 50 N, a Gurley Hill porosity from 10 seconds to 105 seconds, a MVTR of about 3000 g/m$^2$/day to about 9000 g/m$^2$/day, a particle filtration efficiency from 99.5 % to about 99.99 %, a hydrostatic head of 180 cmH$_2$O or above, a resistance to chemical permeation measured according to ISO 6529 against 18 wt% sulphuric acid and 40 wt% sodium hydroxide of 120 min or above, and a surface resistivity below 2.5 x 10$^9$ Ω. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from about 75 g/m$^2$ to 90 g/m$^2$, a trapezoidal tear from 40 N to 60 N, a Gurley Hill porosity from about 30 seconds to 105 seconds, a MVTR of 2000 g/m$^2$/day to about 5000 g/m$^2$/day, a particle filtration efficiency from 99.5 % to about 99.99 %, and a hydrostatic head of about 230 cmH$_2$O or above, a resistance to chemical permeation measured according to ISO 6529 against 18 wt% sulphuric acid and 40 wt% sodium hydroxide of 120 min or above, and a surface resistivity below 2.5 x 10$^9$ Ω. Such bonded sheets are particularly suitable for protective apparel applications, without being limited thereto.

In some embodiments, the flash-spun plexifilamentary fibrils of the bonded sheet are comprised of a high-density polyethylene, and the sheet has a basis weight from 55 g/m$^2$ to 90 g/m$^2$, a Gurley Hill porosity from 10 seconds to 105 seconds, a MVTR of 2000 g/m$^2$/day to about 9000 g/m$^2$/day, a particle filtration efficiency from 99.5 % to about 99.99 %, a hydrostatic head of about 200 cmH$_2$O or above, and an average nail tear resistance from 45 N to 110 N. Such bonded sheets are particularly suitable for roof lining applications, without being limited thereto.

In some embodiments, the flash-spun plexifilamentary fibrils of the bonded sheet are comprised of a high-density polyethylene, and the sheet has a basis weight from 55 g/m$^2$ to about 65 g/m$^2$, a Gurley Hill porosity from 10 seconds to 105 seconds, a MVTR of about 3000 g/m$^2$/day to about 9000 g/m$^2$/day, a particle filtration efficiency from 99.5 % to about 99.99 %, a hydrostatic head of about 200 cmH$_2$O or above, and an average nail tear resistance from 45 N to about 85 N. Such bonded sheets are particularly suitable for roof lining applications, without being limited thereto.

In some embodiments, the flash-spun plexifilamentary fibrils of the bonded sheet are comprised of a high-density polyethylene, and the sheet has a basis weight from about 70 g/m$^2$ to 90 g/m$^2$, a Gurley Hill porosity from about 30 seconds to 105 seconds, a MVTR of 2000 g/m$^2$/day to about 5000 g/m$^2$/day, a particle filtration efficiency from 99.5 % to about 99.99 %, a hydrostatic head of about 230 cmH$_2$O or above, and an average nail tear resistance from 45 N to about 85 N. Such bonded sheets are particularly suitable for roof lining applications, without being limited thereto.

Applicant has found that the bonded sheets according to the invention surprisingly have a very good balance of barrier properties, breathability, surface robustness, and nail tear resistance, which makes them very useful for use in garments, including, but not limited to, protective apparel such as full body protective clothing and partial body protective clothing (including, but not limited to, gowns, overalls, coveralls, trousers, coats, sleeves, hoods, shoe protectors, aprons, etc.), and also in construction applications, including, but not limited to, roof lining and house wrap applications, as well as further applications.

The bonded sheets described herein are robust, breathable and provide an excellent resistance to chemical permeation, which makes them very suitable for protective apparel applications, as a monolayer or in a multilayer structure with a further sheet or film.

Moreover, the bonded sheets described herein have a good nail tear resistance and strength, which makes them very useful in construction applications such as house wrap and roof lining applications, in particular in multilayer structures with a further spunbonded nonwoven sheet.

**Preparation of Bonded Sheet of Nonwoven Flash-spun Plexifilamentary Fibrils of Polymer**

In a further embodiment, there is provided a process for the preparation of a sheet of nonwoven flash-spun plexifilamentary fibrils which comprises the steps of:

(i) generating a spin fluid comprising

(a) from 8 to 11.5 weight percent of a polymer, based on the total amount of the spin fluid, and
(b) a spin agent comprising a chlorine-containing solvent, selected from dichloromethane, cis-1,2-dichloroethylene and trans-1,2-dichloroethylene, in combination with a fluorine-containing solvent,

(ii) flash spinning the spin fluid at a temperature of above 205°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

**Flash-Spinning, Collecting, and Consolidating**

Flash-spinning is a method for producing fibrils having a unique plexifilamentary structure. It involves preparing a solution of a fibril-forming polymer in a spin agent (the spin fluid) at a pressure above the vapor pressure of the spin agent and at a temperature above the normal boiling point of the spin agent, and releasing that spin fluid into a zone of substantially lower temperature and pressure such that the spin agent flash evaporates and the polymer solidifies in the form of plexifilamentary fibrils. Suitable flash spinning processes and equipment which can be used herein are described in US 3,081,519, US 3,227,794, US 3,860,369, and US 7,744,989.

The formed plexifilamentary fibrils of polymer are discharged from each spin orifice, and the shape of these plexifilamentary fibrils of polymer may be modified by any methods known in the art. In some embodiments, the plexifilamentary fibrils of polymer discharged from each spin orifice may be modified by passing into a shroud such as described on US 3,387,326, in other embodiments by passing into a slotted outlet such as described in US 3,467,744 or US 5,788,993, and in other embodiments by passing into a slot fan jet as described in US 8,114,325. In some embodiments, streams of fibrils from multiple orifices may exit via a common slot as described in US 3,564,088.

Sheets comprising plexifilamentary fibrils of polymer can be formed by any method known in the art. In some embodiments, the stream of fibrils discharged from each spin orifice is directed towards a deflector device which alternately directs the stream of fibrils to the left and right onto a moving collecting device such that the fibrils accumulate in the form of a sheet, formed from fibrils oriented in an overlapping, multi-directional configuration. Deflection of the stream of fibrils may be achieved by any suitable means known in the art, including, but not limited to, those described in US 3,277,526 and US 3,387,326, US 3,169,899, US 3,497,918, US 3,593,074, US 3,851,023, US 3,860,369, US 4,148,595, US 5,045,258, US 5,643,524, US 5,731,011, US 5,750,152 and WO 92/20511 A1. The stream of fibrils may also be laid down to form a sheet without deflection as described in US 5,788,993 and US 8,114,325. The method of forming a sheet may further utilize structures in the spin cell such as those described in US 5,123,983, US 5,296,172, and WO 92/20511 A1.

In some embodiments, the streams of fibrils are discharged from spin orifices located on a rotating support, and the fibrils are collected on a collecting belt which surrounds the rotating arrangement circumferentially as described in US 7,118,698, US 7,621,731, US 7,786,034, and US 7,998,388.

The sheet formed by flash-spinning as described herein may be consolidated by applying a small amount of pressure to the sheet. In some embodiments, the sheet may be passed under a roller which applies pressure to the sheet to form a lightly consolidated sheet.

A broad range of different polymers and blends/mixtures thereof can be used in the process described herein. In some embodiments, the polymer is selected from polyolefins. In some embodiments, polyolefins are polyethylene (PE), polypropylene (PP), and blends/mixtures thereof. Particularly preferred polyolefins are polyethylene (PE), in particular high-density polyethylene (HDPE), and blends/mixtures of high-density polyethylene (HDPE) and low-density polyethylene (LDPE), and blends/mixtures of high-density polyethylene (HDPE) and linear low-density polyethylene (LLDPE). In some embodiments, the polyolefin comprises at least 80 weight percent of high-density polyethylene (HDPE), based on the total amount of polymer. In other embodiments, the polyolefin comprises at least 90 weight percent of high-density polyethylene (HDPE), based on the total amount of polymer, and in other embodiments, the polyolefin comprises at least 95 weight percent of high-density polyethylene (HDPE), based on the total amount of polymer.

The spin agent comprises a chlorine-containing solvent, selected from dichloromethane, cis-1,2-dichloroethylene and trans-1,2-dichloroethylene, in combination with a fluorine-containing solvent. In some embodiments, the spin fluid comprises the polymer in an amount from 8.0 to 11.5 weight percent, based on the total amount of the spin fluid, in other embodiments, the spin fluid comprises the polymer in an amount from about 8.5 to about 11.0 weight percent, based on the total amount of the spin fluid, and in other embodiments, the spin fluid comprises the polymer in an amount from about 9 to about 11 weight percent, based on the total amount of the spin fluid.

In some embodiments, the spin fluid comprises the spin agent in an amount from about 88.5 to about 92 weight percent, based on the total amount of the spin fluid, in other embodiments, the spin fluid comprises the spin agent in an amount from about 89 to about 91.5 weight percent, based on the total amount of the spin fluid, and in other embodiments, the spin fluid comprises the spin agent in an amount from about 89 to about 91 weight percent based on the total amount of the spin fluid.

In some embodiments, the flash-spinning is performed at a temperature from 205°C to about 230°C, in other embodiments, from 205°C to about 225°C, and in other embodiments, from about 210°C to about 220°C.

The spin agent comprises a chlorine-containing solvent, selected from dichloromethane, cis-1,2-dichloroethylene and trans-1,2-dichloroethylene, in combination with a fluorine-containing solvent. In some embodiments, the spin agent comprises a chlorine-containing solvent, selected from dichloromethane, cis-1,2-dichloroethylene and trans-1,2-dichloroethylene, in combination with a fluorine-containing solvent which is a hydrofluorocarbon having three to six carbon atoms, perfluorocarbons having three to six carbon atoms or a hydrofluoroether. In some embodiments, the perfluorocarbons or hydrofluorocarbons having three to six carbon atoms of the spin agent are perfluoropentane, perfluorohexane, 1,1,1,3,3-pentafluorobutane, 1H,4H-perfluorobutane, 2H,3H-decafluoropentane, 1H,6H-perfluorohexane, or 1H-perfluorohexane.

In some embodiments, the spin agent consists essentially of a mixture of dichloromethane and 2H,3H-decafluoropentane, 1H,4H-perfluorobutane, 1H,6H-perfluorohexane, 1H-perfluorohexane, perfluoropentane, perfluorohexane and 1,1,1,3,3-pentafluorobutane, in other embodiments, the spin agent consists essentially of from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, and in other embodiments, from about 75 to about 85 weight percent dichloromethane and from about 15 to about 25 weight percent 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane.

In some embodiments, the spin agent consists of a mixture of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, in other embodiments, the spin agent consists of from about 70 to about 85 weight percent dichloromethane and from about 15 to about 30 weight percent 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane, and in other embodiments, from about 75 to about 85 weight percent dichloromethane and from about 15 to about 25 weight percent of 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane.

In some embodiments, the plexifilamentary fibrils are spun at a spin temperature from about 205°C to about 230°C using a spin fluid comprising about 8 to about 11.5 weight percent polymer or comprising about 8.5 to about 11.5 weight percent polymer, and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane. In other embodiments, the plexifilamentary fibrils are spun at a spin temperature from about 205°C to about 225°C using a spin fluid comprising about 9 to about 11 weight percent polymer and comprising a spin agent which comprises, consists essentially of, or consists of dichloromethane and 2H,3H-decafluoropentane, 1H,4H-perfluorobutane, 1H,6H-perfluorohexane, 1H-perfluorohexane, perfluoropentane, perfluorohexane or 1,1,1,3,3-pentafluorobutane.

The spin fluid may include additives, such as antioxidants or acid scavengers in minor amounts. In some embodiments, the spin fluid comprises additives in an amount of about 1.5 weight percent or less of the total amount of the spin fluid, and in other embodiments, in an amount of about 0.1 weight percent or less of the total amount of the spin fluid.

**Thermal Bonding By Embossing**

After the sheet is formed into a consolidated sheet as described herein, the consolidated sheet is then subjected to thermal bonding via embossing including, but not limited to, using embossing roll(s) and rubber coated back-up roll(s) to bond one or two sides of the consolidated sheet, to form a thermally bonded sheet.

In some embodiments, at least one side of the consolidated sheet is embossed, in other embodiments, only one side of the consolidated sheet is embossed, and in other embodiments, both sides of the consolidated sheet are embossed.

The embossing roll(s) apply heat and pressure locally over a portion of the surface of the consolidated sheet to bond the consolidated sheet and form an embossed pattern. The degree of bonding can vary by adjusting the nip pressure, temperature, and length of time during which these are applied.

In some embodiments, the static pressure in the nip of the embosser (nip pressure) is between 150 kPa and 750 kPa. An "embosser" as used herein means a pair of two rolls forming a nip, one being a heated embossing roll and the other being a rubber coated back-up roll. In other embodiments, the static pressure in the nip of the embosser is between 150 kPa and about 500 kPa.

In some embodiments, the nip pressure is applied for 10 ms to 20 ms, in other embodiments, the nip pressure is applied for 10 ms to about 15 ms, and in other embodiments, for 10 ms to about 14 ms.

The nip pressure can be varied with embossing roll configuration and engraving patterns, backup roll diameter, rubber hardness and thickness. The embossing roll(s) may be any suitable material known in the art. In some embodiments, the embossing roll(s) are metal. The embossing roll(s) are engraved with a pattern including, but not limited to, a linen pattern as described in US 7,744,989. Further patterns which may be used on one side of the sheet in case both sides of the sheet are bonded, are a point pattern as described in US 3,478,141, US 6,610,390, and US 2004/241399 A1, a rib pattern as described in US 2003/0032355 A1 and US 2003/0165667 A1, a linen pattern or a random pattern as described in US 7,744,989, and other variations of patterns as described in US 5,620,779 and US 5,964,742.

In some embodiments, each embossing roll has a temperature from about 135°C to about 210°C during bonding, and in other embodiments, each embossing roll has a temperature from about 140°C to about 155°C during bonding.

In some embodiments, the consolidated sheet wraps the heated embosser roll such that the angle between the direction of entry and the direction of exit (the wrap angle) is from about 10° to about 140°, in other embodiments, the wrap angle is from about 10° to about 100°, and in other embodiments, the wrap angle is from about 10° to about 60°.

In some embodiments, the consolidated sheet may be in contact with pre-heat rolls before thermally bonding and/or may be in contact with cooling rolls after thermally bonding, in a configuration as described in US 5,972,147. In some embodiments, the temperature of the pre-heat roll may be varied from 50°C to 20°C below the melting peak temperature of the polymer.

Each side of the consolidated sheet may be embossed using the same pattern or a different pattern. In some embodiments, the consolidated sheet is embossed on both sides using the same pattern, and in other embodiments, the consolidated sheet is embossed on both sides using different patterns. In some embodiments, the consolidated sheet is embossed on both sides using a linen pattern. In some embodiments, the consolidated sheet is embossed on one side using a point pattern and, on another side, using a linen pattern, and in other embodiments, the consolidated sheet is embossed on one side using a rib pattern and, on another side, using a linen pattern. In some embodiments, the consolidated sheet is embossed on both sides using a rib pattern, and in other embodiments, the consolidated sheet is embossed on both sides with a point bond pattern.

In one embodiment the sheet is embossed by passing through a nip of two rolls, one being an embossing roll engraved with a linen pattern and the other a back-up roll with a Shore A hardness of 50 to 70.

The patterns on the embossing roll(s) may be any suitable depth known in the art. Each embossing roll may have patterns at the same depth or at different depths. In some embodiments, the consolidated sheet is embossed using embossing rolls having patterns at different depths such that certain portions of the consolidated sheet are subjected to more bonding than others.

The percentage of surface area on each side of the consolidated sheet that is embossed may vary. In some embodiments, from about 6 % to about 85 % of the area of at least one side of the consolidated sheet is embossed. In some embodiments, from about 10 % to about 60 % of the area of one side of the consolidated sheet is embossed, or from about 15 % to about 60 % or from about 20 % to about 60 % or from about 26 % to about 60 % from about 30 % to about 60 %. In other embodiments, from about 50 % to about 85 % of the area of one side of the consolidated sheet is embossed. In some embodiments, from about 6 % to about 85 % of the area of both sides of the consolidated sheet is embossed. In some embodiments, from about 10 % to about 60 % of the area of both sides of the consolidated sheet is embossed, or from about 15 % to about 60 % or from about 20 % to about 60 % or from about 26 % to about 60 % from about 30 % to about 60 %. In other embodiments, from about 50 % to about 85 % of the area of both sides of the consolidated sheet is embossed.

In some embodiments, about 50 % to about 85 % of the area of one side of the consolidated sheet is embossed using a linen pattern, and about 15 % to about 60 % or about 20 % to about 60 % or about 26 % to about 60 % of the area of other side of the consolidated sheet is embossed using a rib pattern.

The process described herein provides a bonded sheet of nonwoven flash-spun plexifilamentary fibrils having sufficient surface robustness and strength, while still having high breathability.

In some embodiments after the consolidated sheet is thermally bonded as described herein, the thermally bonded sheet is then subjected to a mechanical softening process to obtain a softened sheet of nonwoven flash-spun plexifilamentary fibrils. During the mechanical softening process described herein, the thermally bonded sheet is passed through a nip of two rolls which are driven at substantially the same speed as the speed of the thermally bonded sheet as it passes through the rolls. This is in contrast to some prior art softening processes where the thermally bonded sheet is passed over a sequence of rolls that are driven at a different speed than the speed of the thermally bonded sheet. This difference in speed creates a rubbing effect that leads to loose fibrils, which can jeopardize the barrier properties of the softened sheet.

In some embodiments, the thermally bonded sheet is mechanically softened by passing it through a nip of two rolls, each rotating in the opposite direction as the other roll and each bearing a multiplicity of interpenetrating pins. The pins of each roll may be arranged in an array and have ends that are equidistant from the roll's axis. The array of pins on one roll interpenetrates the array of pins on the opposite roll by an amount that is at least equal to the thickness of the sheet.

Various geometric configurations may be used for the interpenetrating pins, including, but not limited to, blunt pins, meaning a pin that includes at least a distal end that has a blunt surface and a shaft that has a surface. A blunt surface, i.e., a surface not having a sharp point, includes, but is not limited to, a blunt surface that is rounded, forming a smooth curving surface, or a blunt surface that is flat.

In some embodiments the thermally bonded sheet is subjected to a mechanical softening process as described in US 3,408,709. In some embodiments the thermally bonded sheet is subjected to a mechanical softening process as described in US 5,966,785 and US 6,195,854. In some embodiments the thermally bonded sheet is subjected to a mechanical softening process as described in US 3,920,874 and US 3,811,979.

In some embodiments, an antistatic treatment is applied to the thermally bonded or bonded and softened sheet. Antistatic treatment improves electrostatic properties of a textile, in particular surface resistivity. In some embodiments, the antistatic treatment is applied by applying a coating composition comprising an antistatic compound. In some embodiments, the antistatic compound is a phosphate ester, in particular a phosphate ester defined by the formula: $M_n R_{3-n} PO_4$, where M is selected from the group consisting of lithium, sodium, potassium, and ammonium ions, R represents an alkyl group containing 3 to 5 carbon atoms, and n is selected from the integers 1 and 2. In some embodiments, the antistatic compound is selected from potassium di-n-propyl phosphate, dipotassium n-propyl phosphate, potassium di-i-propyl phosphate, dipotassium i-propyl phosphate, potassium di-n-butyl phosphate, dipotassium n-butyl phosphate, potassium di-i-butyl phosphate, dipotassium i-butyl phosphate, and combinations thereof.

In some embodiments, there is provided a sheet of nonwoven flash-spun plexifilamentary fibrils obtained or obtainable by the process described herein. In some embodiments, the obtained sheet has

    (a) a basis weight from 55 $g/m^2$ to 90 $g/m^2$,
    (b) a particle filtration efficiency of 99.5 % or more,
    (c) a hydrostatic head of 180 $cmH_2O$ or more, and
    (d) a moisture vapor transmission rate of 2000 $g/m^2$/day or more

## Uses, Multilayer Structures, and Articles

The sheet of nonwoven flash-spun plexifilamentary fibrils as described herein has many uses and may be used in a variety of applications, including, but not limited to, multilayer structures, garments (including, but not limited to, protective apparel), house wrap, roof lining, car covers, and medical packaging.

Further embodiments relate to a multilayer structure comprising at least one sheet of nonwoven flash-spun plexifilamentary fibrils as described herein, and at least one further sheet or a film.

In some embodiments, the multilayer structure comprises a film that is a microporous film. In one embodiment, the microporous film is a film that is filled and stretched as described in US 9,809,004 B2. Microporous films from highly filled polymers, usually polyolefins, may be prepared by any methods known in the art. Typically, a combination of a polyolefin, usually a polyethylene, is compounded with a filler, usually calcium carbonate, and extruded and stretched into a film to form a microporous film. Suitable examples of microporous films include those described in U.S. Pat. Nos. 4,472,328, 4,350,655 and 4,777,073. A multilayer structure comprising a microporous film and at least one sheet of nonwoven flash-spun plexifilamentary fibrils as described herein can be used in a variety of applications, including, but not limited to, protective apparel.

In some embodiments, the multilayer structure is a laminated structure comprising a microporous film laminated with at least one sheet of nonwoven flash-spun plexifilamentary fibrils as described herein. In some embodiments, a microporous film and a sheet of nonwoven flash-spun plexifilamentary fibrils may be laminated using an adhesive layer situated in contact with a least a portion of both the microporous film and the sheet of nonwoven flash-spun plexifilamentary fibrils, as described in US 9,809,004 B2.

In some embodiments, the multilayer structure is a composite structure comprising at least one bonded sheet of nonwoven flash-spun plexifilamentary fibrils as described herein and at least one further sheet, which is a sheet of a thermoplastic reinforcing material having reinforcing properties, such as a thermoplastic reinforcing grid material and/or a spunbonded material, and/or a water absorbing sheet, such as a needle felt.

In some embodiments, the multilayer structure is a composite structure comprising two or more sheets, in other embodiments, the multilayer structure is a composite structure comprising three or more sheets, and in other embodiments, the multilayer structure is a composite structure comprising four or more sheets.

In some embodiments, the at least one bonded sheet of nonwoven flash-spun plexifilamentary fibrils and the one further sheet at least are held together by thermal lamination, in some embodiments, the at least one bonded sheet of nonwoven flash-spun plexifilamentary fibrils and the one further sheet are held together by thermal welding, and in some embodiments, the at least one bonded sheet of nonwoven flash-spun plexifilamentary fibrils and the one further sheet are held together by using an adhesive, such as a hot melt adhesive, applied to at least a portion of the surface of the at least one bonded sheet of nonwoven flash-spun plexifilamentary fibrils. Suitable lamination or bonding techniques are described in US 5,750,444, US 5,294,258 and US 9,816,264. The same or different bonding techniques may be applied within one composite structure.

In some embodiments, the thermoplastic reinforcing material is a thermoplastic reinforcing grid material having a structure formed of relatively thick, strong fibres regularly spaced in one layer to form an open mesh with regularly shaped openings.

In other embodiments, the thermoplastic reinforcing material is a spunbonded sheet having a structure with randomly laid continuous fibres in multiple, overlapping layers and thermally or adhesively bonded. In some embodiments, the spunbonded material is made of polyethylene, in other embodiments, the spunbonded material is made of polypropylene, and in other embodiments, the spunbonded material is made of polyester. In some embodiments, the thermoplastic reinforcing material is a spunbonded nonwoven having a basis weight from 45 g/m$^2$ to 120 g/m$^2$. In some embodiments, the spunbonded nonwoven is made of polypropylene (SBPP). Useful commercially available spunbonded nonwovens are Typar$^®$ 3267-P or Typar$^®$ SF32.

In some embodiments the multilayer structure comprises one or more water absorbing sheets. In some embodiments, the one or more water absorbing sheets are needle felts. In some embodiments, the needle felts comprise synthetic fibres, natural fibres, or combinations thereof. In some embodiments, the synthetic fibres comprising the needle felts are polyester fibres, polypropylene fibres, polyethylene fibres, acrylic fibres, or combinations thereof.

In some embodiments, the multilayer structure is at least a three-layered composite structure comprising at least one bonded sheet of nonwoven flash-spun plexifilamentary fibrils as described herein, a thermoplastic reinforcing grid material, and a spunbonded material. In some embodiments, the bonded sheet of nonwoven flash-spun plexifilamentary fibrils as described herein is a first outer layer, the sheet of thermoplastic reinforcing grid material is a middle layer, and the sheet of spunbonded material is a second outer layer. In other embodiments, the bonded sheet of nonwoven flash-spun plexifilamentary fibrils as described herein is a first outer layer, the sheet of spunbonded material is a middle layer, and the sheet of thermoplastic reinforcing grid material is a second outer layer. In other embodiments, the bonded sheet of nonwoven flash-spun plexifilamentary fibrils as described herein is arranged between the at least two further layers of the multilayer.

In some embodiments, the multilayer structure is at least a three-layered composite structure comprising at least one bonded sheet of nonwoven flash-spun plexifilamentary fibrils as described herein, a sheet of thermoplastic reinforcing grid material, and a needle felt sheet. In some embodiments, the bonded sheet of nonwoven flash-spun plexifilamentary fibrils as described herein is a first outer layer, the sheet of thermoplastic reinforcing grid material is a middle layer, and the needle felt sheet is a second outer layer. In other embodiments, the bonded sheet of nonwoven flash-spun plexifilamentary fibrils as described herein is a first outer layer, the needle felt sheet is a middle layer, and the sheet of thermoplastic reinforcing grid material is a second outer layer. In other embodiments, the bonded sheet of nonwoven flash-spun plexifilamentary fibrils as described herein is arranged between the at least two further layers of the multilayer.

In some embodiments, the multilayer structure is at least a three-layered composite structure comprising at least one bonded sheet of nonwoven flash-spun plexifilamentary fibrils as described herein, a sheet of spunbonded material, and a needle felt sheet. In some embodiments, the bonded sheet of nonwoven flash-spun plexifilamentary fibrils as described herein is a first outer layer, the sheet of spunbonded material is a middle layer, and the needle felt sheet is a second outer layer. In other embodiments, the bonded sheet of nonwoven flash-spun plexifilamentary fibrils as described herein is a first outer layer, the needle felt sheet is a middle layer, and the sheet of spunbonded material is a second outer layer. In other embodiments, the bonded sheet of nonwoven flash-spun plexifilamentary fibrils as described herein is arranged between the at least two further layers of the multilayer.

In some embodiments, the multilayer structure is at least a four-layered composite structure comprising at least one bonded sheet of nonwoven flash-spun plexifilamentary fibrils as described herein, a sheet of spunbonded material, a sheet of thermoplastic reinforcing grid material, and a needle felt sheet.

In some embodiments, the multilayer structure has

(a) an average tensile strength from 200 N to 600 N,
(b) an average nail tear resistance from 130 N to 600 N,
(c) a Moisture Vapor Transmission Rate of 2000 g/m$^2$/day or more, and
(d) a hydrostatic head of 250 cmH$_2$O or more.

Further embodiments relate to use of the sheet of nonwoven flash-spun plexifilamentary fibrils as described herein for preparing a multilayer structure.

Further embodiments relate to use of the sheet of nonwoven flash-spun plexifilamentary fibrils as described herein for the production of garments or construction applications including roof lining and house wrap.

Further embodiments relate to use of the multilayer structure as described herein for the production of garments.

Further embodiments relate to an article comprising at least one sheet of nonwoven flash-spun plexifilamentary fibrils as described herein or comprising at least one multilayer structure as described herein. In some embodiments, the article is selected from garments, protective apparel, house wraps, roof linings, car covers, and medical packaging. Protective apparel includes full body protective clothing and partial body protective clothing (including, but not limited to, gowns, overalls, coveralls, trousers, smocks, coats, sleeves, hoods, shoe protectors, aprons, etc.) and other garments whose purpose is to protect the wearer against exposure to hazardous materials in the environment, or to protect the wearer's environment against being contaminated by the wearer. In some embodiments, the article is a medical packaging, including, but not limited to, medical wrap for the packaging of medical items such as surgical instruments during sterilization.

## EXAMPLES

Different bonded sheets of nonwoven flash-spun plexifilamentary fibrils have been prepared. The experimental procedure and results are provided below. These examples are given to illustrate exemplary embodiments of the invention and should not be interpreted as limiting in any way.

### Materials Used

Dichloromethane, CAS Nr. 75-09-2, has an atmospheric boiling of 39.6°C, a molecular weight of 84.93 g/mol and a critical temperature of 236.68°C. The dichloromethane used had a purity level above 99.5 percent by weight.

2H,3H-decafluoropentane (HFC-4310-mee), CAS Nr. 138495-42-8, has an atmospheric boiling point of 55°C, a molecular weight of 252.05 g/mol and a critical temperature of 181°C. The 2H,3H-decafluoropentane used had a purity level above 99.5 percent by weight.

The polyethylene used had a density of 0.957 g/cm$^3$ (ISO 1183), and melt flow rate of 0.3/10min (ISO 1133 condition D, 190°C/2.16 kg) and 22/10min (ISO 1133 condition G, 190°C/21.6 kg).

The following garment products comprising laminates of a microporous film or film with a nonwoven material were purchased and used as received: 3M 4545 (3M Company), Activgard XP (Northern Safety Co., Inc.), KleenGuard A30 (Kimberly-Clark Corporation), KleenGuard A40 (Kimberly-Clark Corporation), Alphatec 2000 Standard (Ansell, Ltd.), MicroMax NS (Lakeland Ind.), Proshield 60 (DuPont de Nemours, Inc.), and KleenGuard A71 (Kimberly-Clark Corporation).

The flash-spun sheets in the examples are produced using the flash spinning process described by US 3,227,794 and US 3,851,023. US 3,227,794 describes a flash spinning process where the pressure is reduced below the cloud point of the spin fluid before it is released into a zone of substantially lower temperature and pressure such that the spin agent flash evaporates and the polymer solidifies in the form of plexifilamentary fibrils. The cloud point pressure for spin agents which are mixtures of trans-1,2-DCE and DCM with fluorinated compounds is reported in, but not limited to, US 6,004,672, US 7,300,968, and US 7,179,413.

### Results

### Comparative example 1

Commercially available laminates of microporous films or films were tested for their barrier properties and surface robustness. The results are reported in Table 1, below.

## Table 1: Summary of properties of laminates of microporous films or films:

| | 3M 4545 | Activgard XP | KleenGuard A30 | KleenGuard A40 | Alphatec 2000 Standard | MicroMax NS, | Proshield 60 | KleenGuard A71 |
|---|---|---|---|---|---|---|---|---|
| Type | MPF | MPF | MPF | MPF | MPF | MPF | MPF | Film |
| Gurley Hill porosity(s) | 241 | 196 | 543 | 661 | 467 | 2408 | 891 | 45200 |
| MVTR (g/m$^2$/day) | 6369.5 | 6940.0 | 3590.5 | 3394.5 | 1790.0 | 4491.5 | 1621.0 | 98.5 |
| Hydrostatic head (cmH$_2$O) | 217.8 | 261.0 | 136.2 | 301.2 | 267.9 | 247.3 | 277.8 | 303.2 |
| PFE (%) | >99.9 | >99.9 | >99.9 | >99.9 | >99.9 | >99.9 | >99.9 | >99.9 |
| ISO 6529 18 wt% H$_2$SO$_4$ (min) | 480.0 | 85.7 | 10.0 | 480.0 | 480.0 | 322.3 | 78.0 | r nm |
| ISO 6529 30 wt% H$_2$SO$_4$ (min) | n.m. | n.m. | n.m. | 45.3 | 77.3 | n.m. | 9.7 | 480.0 |
| ISO 6529 40 wt% NaOH (min) | 3.0 | 480.0 | 2.0 | 19.0 | 50.0 | 48.0 | 4.3 | 480.0 |
| Surface robustness (% pass) | 41.7 | 0 | 33 | 0 | 41.7 | 16.7 | 33 | 100 |

MPF = microporous film

Table 1 shows properties of commercially available laminates of microporous films and films for protective apparel applications. The transport of the gas or moisture is represented by the Gurley Hill porosity and the moisture vapor transmission rate. The barrier to liquids is represented by the hydrostatic head. In addition, the permeation to liquids is reported. The barrier to particles is reflected by the particle filtration efficiency. The surface robustness is represented by a fabric cohesion test/peel test on the side of the microporous film.

Table 1 shows that none of the microporous film laminates perform well on all properties. Particularly, all fabrics failed to have a satisfying surface robustness. Moreover, none of the prior art laminates had a good resistance to permeation according to ISO 6529 against both sodium hydroxide and sulphuric acid. In addition, the high Gurley Hill porosity of the prior art laminates is unsatisfactory for use as protective apparel.

**Comparative examples 2 and 3**

A flash-spun sheet was produced using the flash spinning process described by US 3,227,794 and US 3,851,023 at different spin temperatures using a spin fluid of a polyethylene with a density >0.95 g/cm$^3$ and a melt flow rate of 0.74 g/10min (ISO 1133 190°C/2.16 kg) at different polymer concentrations in a spin agent that was a mixture of dichloromethane and 2H,3H-decafluoropentane (herein also referred to as "D"). The flash-spun sheet was subsequently thermally bonded using a process as described in US 2003/00165667 A1. The consolidated sheets were first in alternating contact with two pre-heat rolls set at a temperature of 60°C before being embossed on one side with a linen pattern and on the other side with a rib pattern. The fabrics were subsequently mechanically softened by passing them through a nip of two rolls with interpenetrating blunt pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 2, below.

**Table 2: Summary of the sheet preparation of Comparative Examples 2 and 3.**

| Example | CE2 | CE3 |
|---|---|---|
| Spin agent | D | D |
| Spin temperature (°C) | 190 | 200 |
| Polymer concentration (wt%) | 14 | 12.75 |
| Spin pressure (bar) | 79 | 93 |
| Pre-heat | Yes | Yes |
| Pre-heat temperature (°C) | 105°C | 110°C |
| Embosser 1 | linen | linen |
| Rubber hardness (shore A) | 60 | 70 |
| Nip pressure (kPa) | 467 | 792 |
| Embosser 2 | rib | Rib |
| Rubber hardness (shore A) | 70 | 70 |
| Softening pin interpenetration (mm) | 1.2 | 1.2 |
| Basis weight (g/m$^2$) | 79.91 | 58.4 |
| Gurley (s) | 942.4 | 497.3 |
| MVTR (g/m$^2$/day) | 430 | 934 |
| Hydrostatic head (cm) | 250.6 | 229.7 |
| PFE (%) | 99.93 | 99.99 |
| Handle-o-meter (gf) | 82.68 | 60.5 |
| Handle-o-meter (N) | 0.81 | 0.59 |
| BET surface area (m$^2$/g) | 9.11 | 6.86 |
| Tensile strength in MD (N) | 176.6 | 174.2 |
| Tensile strength in XD (N) | 128.4 | 116.9 |
| Average tensile strength (N) | 152.5 | 145.5 |
| Average trapezoidal tear resistance (N) | 54.48 | 29.9 |
| Average nail tear resistance (N) | 120.99 | 68.2 |
| Surface robustness (%pass) | 100 | 100 |
| crystallinity index (%) | n.m | n.m |
| crystallinity index orthorhombic (%) | n.m | n.m |
| crystallinity index monoclinic (%) | n.m | n.m. |

The fabrics of Comparative Examples 2 and 3 have a low permeability to gas as reflected by a high Gurley Hill porosity and low MVTR, making them unsuitable for use in protective apparel and roof lining applications.

**Examples 1 to 5**

A flash-spun sheet was produced using the flash spinning process described by US 3,227,794 and US 3,851,023 at a spin temperature of 210°C using a spin fluid of a polyethylene with a density >0.95 g/cm$^3$ and a melt flow rate of 0.74 g/10min (ISO 1133 190°C/2.16 kg) at a concentration of 11 wt% in a spin agent that was a mixture of dichloromethane and 2H,3H-decafluoropentane (herein also referred to as "D"). The flash-spun sheet was subsequently thermally bonded using a process as described in US 2003/00165667. The consolidated sheets were first in alternating contact with two pre-heat rolls set at a temperature of 100°C to 110°C before being embossed on one side with a linen pattern and on the other side with a rib pattern. The fabrics were subsequently mechanically softened by passing them through a nip of two rolls with interpenetrating rounded pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

The spinning, bonding, and softening conditions and sheet properties are reported in Table 3, below.

**Table 3: Summary of the sheet preparation of Examples 1 to 5.**

| Example | E1 | E2 | E3 | E4 | E5 |
|---|---|---|---|---|---|
| Spin agent | D | D | D | D | D |
| Spin temperature (°C) | 210 | 210 | 210 | 210 | 210 |
| Polymer concentration (wt%) | 11 | 11 | 11 | 11 | 11 |
| Spin pressure (bar) | 109 | 109 | 109 | 109 | 109 |
| Pre-heat | Yes | Yes | Yes | Yes | Yes |
| Pre-heat temperature (°C) | 110 | 105 | 95 | 105 | 115 |
| Embosser 1 | linen | linen | linen | linen | linen |
| Rubber hardness (shore) | 60 | 60 | 60 | 60 | 60 |
| Nip pressure (kPa) | 467 | 467 | 467 | 467 | 467 |
| Nip pressure application time (ms) | 12.3 | 12.3 | 12.3 | 11.4 | 11.4 |
| Wrap angle embosser 1 (°) | 120 | 120 | 130 | 130 | 130 |
| Embosser 2 | Rib | Rib | Rib | Rib | Rib |
| Rubber hardness (shore A) | 70 | 70 | 70 | 70 | 70 |
| Wrap angle embosser 2 (°) | 120 | 120 | 130 | 130 | 130 |
| Softening pin interpenetration (mm) | None | 1.2 | 1.2 | 1.2 | 1.2 |
| Basis weight (g/m$^2$) | 81.12 | 81.12 | 78.94 | 57.57 | 56.74 |
| Gurley (s) | 105.3 | 76.6 | 63.3 | 40.2 | 39.9 |
| MVTR (g/m$^2$/day) | 2698 | 3141 | 3370 | 4426 | 4135 |
| Hydrostatic head (cm) | 258.5 | 244.7 | 236.8 | 206.9 | 210.7 |
| PFE (%) | 99.97 | 99.95 | n.m. | 99.96 | 99.47 |
| ISO 6529 30 wt% $H_2SO_4$ (min)* | > 480 | > 480 | > 480 | > 480 | > 480 |
| ISO 6529 40 wt% NaOH (min) | > 480 | > 480 | > 480 | > 480 | > 480 |
| Handle-o-meter (qf) | 142.48 | 90.02 | 86.84 | 56.79 | 56.72 |
| Handle-o-meter (N) | 1.40 | 0.88 | 0.85 | 0.56 | 0.56 |
| BET surface area (m$^2$/g) | 4.70 | 4.42 | 4.30 | 5.01 | 4.53 |
| Tensile strength in MD (N) | 183.1 | 192.2 | 175.3 | 130.1 | 163.0 |
| Tensile strength in XD (N) | 188.2 | 182.4 | 173.8 | 120.0 | 133.8 |
| Average tensile strength (N) | 185.6 | 187.3 | 174.5 | 125.1 | 148.4 |
| Average trapezoidal tear resistance (N) | 39.9 | 44.69 | 45.2 | 45.70 | 29.92 |
| Average nail tear resistance (N) | 90.28 | 89.81 | 91.2 | 85.08 | 64.40 |
| Surface robustness (%pass) | 100 | 100 | 92 | 100 | 91.7 |
| crystallinity index (%) | n.m | n.m | n.m. | 71.8 | 71.4 |
| crystallinity index orthorhombic (%) | n.m | n.m | n.m. | 71.8 | 71.4 |

(continued)

| Example | E1 | E2 | E3 | E4 | E5 |
|---|---|---|---|---|---|
| crystallinity index monoclinic (%) | n.m | n.m. | n.m. | - | - |
| *The measurements following ISO 6529 18 wt% $H_2SO_4$ also provide >480 min. $H_2SO_4$ | | | | | |

Examples 1 to 5 illustrate that a beneficial combination of properties can be obtained when performing the flash spinning process within the temperature and polymer concentrations specified herein, in comparison to comparative examples 2 and 3. Additionally, it has surprisingly been observed that the sheets of the Examples combine good flux properties as reflected by a low Gurley Hill porosity and a high MVTR while maintaining a high nail tear resistance, trapezoidal tear resistance and excellent resistance to permeation according to ISO 6529, combined with very good surface robustness in the peel test. The sheets of the Examples 1 to 5 are suitable for use in protective apparel and roof lining applications.

**Examples 6 to 12**

A flash-spun sheet was produced using the flash spinning process described by US 3,227,794 and US 3,851,023 at a spin temperature of 210°C using a spin fluid of a polyethylene with a density >0.95 g/cm$^3$ and a melt flow rate of 0.74 g/10min (ISO 1133 190°C/2.16 kg) at a concentration of 11 wt.% in a spin agent that was a mixture of dichloromethane and 2H,3H-decafluoropentane (herein also referred to as "D"). The flash-spun sheet was subsequently thermally bonded on one side with a linen pattern and on the other side with a rib pattern. The fabrics of Examples 6, 8, 10, and 11 were subsequently mechanically softened by passing them once (Examples 6, 10, and 11) or twice (Example 8) through a nip of two rolls with interpenetrating rounded pins having a diameter of 1 mm, with an upper edge radius of curvature of 0.25 mm. The blunt pins were separated by 3.3 mm center-to-center in MD direction and 3.2 mm center-to-center in XD direction at the point of interacting with the flash-spun sheet.

Examples E6 to E8 have been coated with an aqueous solution of Zelec® TY (a phosphate ester-based antistatic agent available from Stepan Europe) on both sides using a reverse gravure coating technique and subsequently dried in an oven. For Examples 6, 7 and 8, the dry coat weight of antistat on the side of the sheet embossed with the linen pattern was 30 mg/m$^2$, 38 mg/m$^2$, and 28 mg/m$^2$, respectively, and the dry coat weight of antistat on the side of the sheet embossed with the rib pattern was 15 mg/m$^2$, 15 mg/m$^2$, and 19 mg/m$^2$, respectively. The spinning, bonding, and softening conditions and sheet properties are reported in Table 4, below.

**Table 4: Summary of the sheet preparation of Examples 6 to 12.**

| Example | E6 | E7 | E8 | E9 | E10 | E11 | E12 |
|---|---|---|---|---|---|---|---|
| Spin agent | D | D | D | D | D | D | D |
| Spin temperature (°C) | 210 | 210 | 210 | 210 | 210 | 210 | 210 |
| Spin pressure (bar) | 109 | 109 | 109 | 109.5 | 109.5 | 109.5 | 109.5 |
| Polymer concentration (wt%) | 11 | 11 | 11 | 11 | 11 | 11 | 11 |
| Pre-heat | No | No | No | No | No | No | No |
| Embosser 1 | linen | linen | linen | linen | linen | linen | linen |
| Rubber hardness (shore A) | 70 | 70 | 70 | 70 | 70 | 70 | 70 |
| Nip pressure (kPa) | 747 | 747 | 747 | 747 | 747 | 418 | 418 |
| Nip pressure application time (ms) | 13.4 | 14.3 | 15.2 | 14.3 | 14.3 | 12.5 | 9.4 |
| Wrap angle embosser 1 (°) | 45 | 45 | 45 | 60 | 60 | 40 | 40 |
| Embosser 2 | rib | rib | rib | rib | rib | rib | rib |
| Rubber hardness (shore A) | 70 | 70 | 70 | 70 | 70 | 70 | 70 |
| Wrap angle embosser 2 (°) | 85 | 85 | 85 | 100 | 100 | 100 | 100 |
| Softening pin interpenetration (mm) | 1.5 | none | 1.5 x 1.5 | none | 1.4 | 1.4 | none |
| Basis weight (g/m$^2$) | 81.63 | 82.89 | 83.31 | 58.88 | 58.93 | 59.48 | 57.30 |
| Gurley (s) | 73.50 | 101.8 | 57.2 | 92.0 | 57.2 | 32.5 | 21.9 |

(continued)

| Example | E6 | E7 | E8 | E9 | E10 | E11 | E12 |
|---|---|---|---|---|---|---|---|
| MVTR (g/m$^2$/day) | 2951 | 2854 | 3992 | 3299 | 4535 | 4728 | 8223 |
| Hydrostatic head (cm) | 260.7 | 240.7 | 253.0 | 227.0 | 204.7 | 196.2 | 182.3 |
| PFE (%) | 99.99 | 99.99 | 99.98 | 99.88 | 99.89 | 99.71 | 99.76 |
| ISO 6529 30 wt% H$_2$SO$_4$ (min)* | > 480 | > 480 | > 480 | > 480 | > 480 | > 480 | > 480 |
| ISO 6529 40 wt% NaOH (min) | > 480 | > 480 | > 480 | > 480 | > 480 | > 480 | > 480 |
| Handle-o-meter (qf) | 52.15 | 97.12 | 54.05 | 76.29 | 47.79 | 51.43 | 41.88 |
| Handle-o-meter (N) | 0.51 | 0.95 | 0.53 | 0.75 | 0.47 | 0.50 | 0.41 |
| BET surface area (m$^2$/g) | 6.92 | n.m. | 6.07 | n.m. | 5.39 | 5.65 | 6.15 |
| Tensile strength in MD (N) | 124.0 | 129.7 | 136.0 | 138.4 | 131.9 | 152.0 | 125.9 |
| Tensile strength in XD (N) | 128.5 | 154.4 | 149.8 | 127.5 | 125.0 | 155.6 | 117.7 |
| Average tensile strength (N) | 126.3 | 142.1 | 142.9 | 133.0 | 128.4 | 153.8 | 121.8 |
| Average trapezoidal tear resistance (N) | 50.9 | 51.5 | 51.2 | 29.2 | 27.5 | 25.0 | 29.6 |
| Average nail tear resistance (N) | 98.0 | 106.8 | 100.8 | 61.5 | 60.6 | 51.0 | 56.7 |
| Surface robustness (%pass) | 100 | 100 | 100 | 100 | 100 | 91.7 | 75 |
| Surface resistivity linen side ($\Omega$) | 2.70x10$^\$$ | 1.28x10$^\circ$ | 7.61x10$^8$ | n.a. | n.a. | n.a. | n.a. |
| Surface resistivity rib side ($\Omega$) | 2.40x10$^8$ | 3.75x10$^8$ | 4.66x10$^8$ | n.a. | n.a. | n.a. | n.a. |
| Crystallinity index (%) | 63.3 | n.m. | 66.8 | n.m. | 70.2 | 71.5 | 69.4 |
| Crystallinity index orthorhombic (%) | 62.1 | n.m. | 65.8 | n.m. | 70.2 | 71.5 | 69.4 |
| Crystallinity index monoclinic (%) | 1.2 | n.m. | 1.0 | n.m. | - | - | - |
| *The measurements following ISO 6529 18 wt% H$_2$SO$_4$ also provide >480 min. H$_2$SO$_4$ | | | | | | | |

Examples 6 to 12 illustrate that a beneficial combination of properties can be obtained when performing the flash spinning process within the temperature and polymer concentrations specified herein, in comparison to comparative examples 2 and 3. Additionally, it has surprisingly been observed that the sheets of the Examples combine good flux properties as reflected by a low Gurley Hill porosity and a high MVTR while maintaining a high nail tear resistance, trapezoidal tear resistance, and excellent resistance to permeation according to ISO 6529, combined with very good surface robustness in the peel test. The sheets of Examples 6 to 12 are suitable for use in protective apparel and roof lining applications.

**Laminate Examples L1 to L4**

The bonded flash-spun sheets of Examples 3 to 4 were laminated to different spunbonded nonwoven sheets having different basis weights, see Table 5 below.

**Table 5: Summary of Laminates L1 to L4.**

| Example | L1 | L2 | L3 | L4 |
|---|---|---|---|---|
| Flash-spun sheet | E4 | E4 | E3 | E3 |
| Basis weight (g/m$^2$) | 57.57 | 56.74 | 81.12 | 81.12 |
| Spunbonded nonwoven | Typar® 3267-P | SBPP 72g/m$^2$ | SBPP 50g/m$^2$ | Typar® SF32 |
| Basis weight (g/m$^2$) | 90 | 72 | 50 | 105 |
| Gurley (s) | 56.1 | 58.3 | 122.6 | 108.4 |
| MVTR (g/m$^2$/day) | 2888 | 3500 | 2188 | 2457 |
| Hydrostatic head (cm) | 259.2 | 239.7 | 267.5 | 303.8 |

(continued)

| MVTR (g/m$^2$/day) | 2888 | 3500 | 2188 | 2457 |
| --- | --- | --- | --- | --- |
| Tensile strength in MD (N) | 397.0 | 257.1 | 270.7 | 470.0 |
| Tensile strength in XD (N) | 352.3 | 221.3 | 238.2 | 459.6 |
| Average tensile strength (N) | 374.6 | 239.2 | 254.4 | 464.8 |
| Average nail tear resistance (N) | 425.7 | 205.0 | 198.0 | 540.1 |

The laminates have a good combination of mechanical properties such as tensile strength, nail tear resistance, and surface robustness, while having good breathability (MVTR, Gurley Hill porosity) and high hydrostatic head, making them suitable for use in roof lining and house wrap applications.

**Metallization Examples ME1 and ME2**

The flash-spun sheets of Examples 3 and 4 have been metallized with aluminum on the side that was embossed with the linen pattern, using the process described in EP 1789622 B1. The resulting optical density and emissivity measured on the metallized side, are provided in Table 6, below.

**Table 6: Metallized flash-spun sheets.**

| **Example** | ME1 | ME2 |
| --- | --- | --- |
| Flash-spun sheet | E3 | E4 |
| Optical density | 2.41 | 2.23 |
| Emissivity | 0.15 | 0.18 |

**Claims**

1.   A thermally bonded sheet of nonwoven flash-spun plexifilamentary fibrils, the sheet having

(a) a basis weight from 55 g/m$^2$ to 90 g/m$^2$,
(b) a particle filtration efficiency of 99.5 % or more, measured according to the method described herein,
(c) a hydrostatic head of 180 cmH$_2$O or more, measured according to the method described herein, and
(d) a moisture vapor transmission rate of 2000 g/m$^2$/day or more, measured according to the method described herein.

2.   The sheet of claim 1 having a surface robustness with a pass rate of at least 80 %, measured according to the method described herein, or having a BET surface area of 4 m$^2$/g to 8 m$^2$/g, measured according to the method described herein, or having a total crystallinity index of less than 74 %, measured according to the method described herein.

3.   The sheet of any one of claims 1 to 2 having a handle-o-meter stiffness from 0.3 N to 1.5 N, measured according to the method described herein, or having a Gurley Hill porosity of 10 seconds to 110 seconds, measured according to the method described herein and/or having an average trapezoidal tear strength from 25 N to 60 N, measured according to the method described herein, or having an average nail tear resistance from 45 N to 110 N, measured according to the method described herein.

4.   The sheet of any one of claims 1 to 3 having a resistance to chemical permeation measured according to ISO 6529 against 18 wt% H$_2$SO$_4$ and/or 40 wt% NaOH of 120 min or above, or having a water vapor transmission resistance (Ret) of below 23 m$^2$Pa/W, measured according to the method described herein, or
having a surface resistivity below 2.5 x 10$^9$ Ω, measured according to the method described herein, or having an emissivity from 0.05 to 0.25, measured according to the method described herein, and an optical density above 2.0, measured according to the method described herein .

5.   The sheet of any one of claims 1 to 4, wherein the flash-spun plexifilamentary fibrils are comprised of a polyolefin, selected from the group of polyethylene (PE), polypropylene (PP), and blends/mixtures thereof, or wherein the polyolefin is a high-density polyethylene (HDPE), a blend of a high-density polyethylene (HDPE) with a linear low-density polyethylene (LLDPE), or a blend of a high-density polyethylene (HDPE) with a low-density polyethylene (LDPE).

6.  A process for the preparation of a sheet of nonwoven flash-spun plexifilamentary fibrils which comprises the steps of:

(i) generating a spin fluid comprising

(a) from 8 to 11.5 weight percent of a polymer, based on the total amount of the spin fluid, and
(b) a spin agent comprising a chlorine-containing solvent, selected from dichloromethane, cis-1,2-dichloroethylene and trans-1,2-dichloroethylene, in combination with a fluorine-containing solvent,

(ii) flash spinning the spin fluid at a temperature of above 205°C and at a pressure that is above the vapor pressure of the spin fluid into a region of essentially atmospheric pressure to form plexifilamentary fibrils of the polymer,
(iii) collecting the plexifilamentary fibrils of the polymer on a collecting means as a sheet of nonwoven flash-spun plexifilamentary fibrils and applying pressure to the sheet to obtain a consolidated sheet, and
(iv) thermally bonding by embossing the consolidated sheet to obtain a bonded sheet.

7.  The process of claim 6, wherein the consolidated sheet is thermally bonded by passing through a nip of two rolls of an embosser, wherein the static pressure in the nip of the embosser is between 150 kPa and 750 kPa and wherein said pressure is applied for 10 ms to 20 ms, to obtain a bonded sheet.

8.  The process of claim 6 or 7, wherein the process further comprises mechanically softening the bonded sheet, or wherein the process further comprises applying an antistatic treatment to the bonded sheet, and/or wherein the sheet is bonded over between 6 % to 90 % of at least one surface of the sheet, or wherein the sheet is embossed by passing through a nip of two rolls, one being an embossing roll engraved with a linen pattern and the other a back-up roll with a Shore A hardness of 50 to 70.

9.  The process of any one of claims 6 to 8, wherein the polymer is a polyolefin, selected from the group of polyethylene (PE), polypropylene (PP), and blends/mixtures thereof, or wherein the polyolefin is a high-density polyethylene (HDPE), a blend of a high-density polyethylene (HDPE) with a linear low-density polyethylene (LLDPE), or a blend of a high-density polyethylene (HDPE) with a low-density polyethylene (LDPE).

10.  The process of any one of claims 6 to 9, wherein the spin agent consists essentially of dichloromethane in combination with perfluoropentane, perfluorohexane, 1,1,1,3,3-pentafluorobutane, 1H,4H-perfluorobutane, 2H,3H-decafluoropentane, 1H,6H-perfluorohexane, or 1H-perfluorohexane.

11.  A multilayer structure comprising at least one sheet according to any one of claims 1 to 5 and at least one further sheet or film.

12.  The multilayer structure of claim 11 comprising at least one further sheet, wherein the at least one further sheet is a spunbonded nonwoven having a basis weight from 45 $g/m^2$ to 120 $g/m^2$.

13.  The multilayer structure of claim 11 or 12, having

(a) an average tensile strength from 200 N to 600 N,
(b) an average nail tear resistance from 130 N to 600 N,
(c) a moisture vapor transmission rate of 2000 $g/m^2$/day or more, and
(d) a hydrostatic head of 250 $cmH_2O$ or more.

14.  Use of the sheet of any one of claims 1 to 5 for preparing a multilayer structure, or use of a sheet of any one of claims 1 to 5 or of the multilayer structure of any one of claims 11 to 13 for the production of garments or roof linings.

15.  An article comprising a sheet of any one of claims 1 to 5 or a multilayer structure of any one of claims 11 to 13, preferably wherein the article is selected from garments, protective apparel, medical packaging, house wraps, roof linings, or car covers.

**Patentansprüche**

1. Thermisch verbundene Folie aus vliesstoffartigen, flash-gesponnenen plexifilamentären Fibrillen, wobei die Folie aufweist

   (a) ein Flächengewicht von 55 g/m$^2$ bis 90 g/m$^2$,
   (b) eine Partikelfiltrationseffizienz von 99,5 % oder mehr, gemessen nach dem hierin beschriebenen Verfahren,
   (c) eine Wassersäule von 180 cmH$_2$O oder mehr, gemessen nach dem hier beschriebenen Verfahren, und
   (d) eine Wasserdampfdurchlässigkeitsrate von 2000 g/m$^2$/Tag oder mehr, gemessen nach dem hier beschriebenen Verfahren.

2. Folie nach Anspruch 1, die eine Oberflächenrobustheit mit einer Bestehensrate von mindestens 80 % aufweist, gemessen nach dem hier beschriebenen Verfahren, oder die eine BET-Oberfläche von 4 m$^2$/g bis 8 m$^2$/g aufweist, gemessen nach dem hier beschriebenen Verfahren, oder die einen Gesamtkristallinitätsindex von weniger als 74 % aufweist, gemessen nach dem hier beschriebenen Verfahren.

3. Folie nach einem der Ansprüche 1 bis 2, die eine Handle-o-Meter-Steifigkeit von 0,3 N bis 1,5 N aufweist, gemessen nach dem hier beschriebenen Verfahren, oder die eine Gurley-Hill-Porosität von 10 Sekunden bis 110 Sekunden aufweist, gemessen nach dem hier beschriebenen Verfahren, und/oder die eine durchschnittliche Trapezreißfestigkeit von 25 N bis 60 N aufweist, gemessen nach dem hier beschriebenen Verfahren, oder die eine durchschnittliche Nagelreißfestigkeit von 45 N bis 110 N aufweist, gemessen nach dem hier beschriebenen Verfahren.

4. Folie nach einem der Ansprüche 1 bis 3, die eine Beständigkeit gegen chemische Permeation, gemessen nach ISO 6529 gegen 18 Gew.-% H$_2$SO$_4$ und/oder 40 Gew.-% NaOH, von 120 Minuten oder mehr aufweist, oder die einen Wasserdampfdurchlässigkeitswiderstand (Ret) von unter 23 m$^2$Pa/W aufweist, gemessen nach dem hier beschriebenen Verfahren, oder
   die einen spezifischen Oberflächenwiderstand unter 2,5 x 10$^9$ Ω aufweist, gemessen nach dem hier beschriebenen Verfahren, oder die einen Emissionsgrad von 0,05 bis 0,25, gemessen nach dem hier beschriebenen Verfahren, und eine optische Dichte über 2,0, gemessen nach dem hier beschriebenen Verfahren, aufweist.

5. Folie nach einem der Ansprüche 1 bis 4, wobei die flash-gesponnenen plexifilamentären Fibrillen aus einem Polyolefin bestehen, ausgewählt aus der Gruppe Polyethylen (PE), Polypropylen (PP) und Mischungen/Gemischen davon, oder wobei es sich bei dem Polyolefin um ein Polyethylen hoher Dichte (HDPE), eine Mischung aus einem Polyethylen hoher Dichte (HDPE) und einem linearen Polyethylen niedriger Dichte (LLDPE), oder eine Mischung aus einem Polyethylen hoher Dichte (HDPE) und einem Polyethylen niedriger Dichte (LDPE) handelt.

6. Verfahren zur Herstellung einer Folie aus flash-gesponnenen plexifilamentären Fibrillen, das folgende Schritte umfasst:

   (i) Erzeugen einer Spinnflüssigkeit, umfassend

   (a) 8 bis 11,5 Gewichtsprozent eines Polymers, bezogen auf die Gesamtmenge der Spinnflüssigkeit, und
   (b) ein Spinnmittel, umfassend ein chlorhaltiges Lösungsmittel, ausgewählt aus Dichlormethan, cis-1,2-Dichlorethylen und trans-1,2-Dichlorethylen, in Kombination mit einem fluorhaltigen Lösungsmittel,

   (ii) Flash-Spinnen der Spinnflüssigkeit bei einer Temperatur von über 205 °C und einem Druck, der über dem Dampfdruck der Spinnflüssigkeit liegt, in einen Bereich mit im Wesentlichen atmosphärischem Druck, um plexifilamentäre Fibrillen des Polymers zu bilden,
   (iii) Sammeln der plexifilamentären Fibrillen des Polymers auf einer Sammelvorrichtung als Folie aus vliesstoffartigen, flash-gesponnenen plexifilamentären Fibrillen und Ausüben von Druck auf Folie, um eine verfestigte Folie zu erhalten, und
   (iv) thermisches Verbinden durch Prägen der verfestigten Folie, um ein verbundene Folie zu erhalten.

7. Verfahren nach Anspruch 6, wobei die verfestigte Folie durch Durchlaufen des Walzenspalts zweier Prägewalzen thermisch verbunden wird, wobei der statische Druck im Walzenspalt der Prägemaschine zwischen 150 kPa und 750 kPa liegt und der Druck 10 ms bis 20 ms lang angewendet wird, um ein verbundene Folie zu erhalten.

8. Verfahren nach Anspruch 6 oder 7, wobei das Verfahren weiter das mechanische Erweichen der verbundenen Folie umfasst, oder wobei das Verfahren weiter das Aufbringen einer antistatischen Behandlung auf die verbundene Folie umfasst, und/oder

wobei die Folie zwischen 6 % bis 90 % von mindestens einer Seite der Folie verbunden ist, oder wobei die Folie durch Durchlaufen des Walzenspalts zweier Walzen geprägt wird, wobei die eine Walze eine Prägewalze mit einem Leinenmuster und die andere Walze eine Gegenwalze mit einer Shore-A-Härte von 50 bis 70 ist.

9. Verfahren nach einem der Ansprüche 6 bis 8, wobei es sich bei dem Polymer um ein Polyolefin handelt, ausgewählt aus der Gruppe Polyethylen (PE), Polypropylen (PP) und Mischungen/Gemischen davon, oder wobei es sich bei dem Polyolefin um ein Polyethylen hoher Dichte (HDPE), eine Mischung aus einem Polyethylen hoher Dichte (HDPE) und einem linearen Polyethylen niedriger Dichte (LLDPE), oder eine Mischung aus einem Polyethylen hoher Dichte (HDPE) und einem Polyethylen niedriger Dichte (LDPE) handelt.

10. Verfahren nach einem der Ansprüche 6 bis 9, wobei das Spinnmittel im Wesentlichen aus Dichlormethan in Kombination mit Perfluorpentan, Perfluorhexan, 1,1,1,3,3-Pentafluorbutan, 1H,4H-Perfluorbutan, 2H,3H-Decafluorpentan, 1H,6H-Perfluorhexan oder 1H-Perfluorhexan besteht.

11. Mehrschichtstruktur, umfassend mindestens eine Folie nach einem der Ansprüche 1 bis 5 und mindestens eine(n) weitere Folie oder Film.

12. Mehrschichtstruktur nach Anspruch 11, umfassend mindestens ein weitere Folie, wobei es sich bei der mindestens einen weiteren Folie um einen Spinnvliesstoff mit einem Flächengewicht von 45 g/m$^2$ bis 120 g/m$^2$ handelt.

13. Mehrschichtstruktur nach Anspruch 11 oder 12, aufweisend

   (a) eine durchschnittliche Zugfestigkeit von 200 N bis 600 N,
   (b) eine durchschnittliche Nagelreißfestigkeit von 130 N bis 600 N,
   (c) eine Wasserdampfdurchlässigkeitsrate von 2000 g/m$^2$/Tag oder mehr, und
   (d) eine Wassersäule von 250 cmH$_2$O oder mehr.

14. Verwendung der Folie nach einem der Ansprüche 1 bis 5 zur Herstellung einer Mehrschichtstruktur, oder Verwendung der Folie nach einem der Ansprüche 1 bis 5 oder der Mehrschichtstruktur nach einem der Ansprüche 11 bis 13 zur Herstellung von Bekleidung oder Dachverkleidungen.

15. Gegenstand, umfassend eine Folie nach einem der Ansprüche 1 bis 5 oder einer Mehrschichtstruktur nach einem der Ansprüche 11 bis 13, wobei der Gegenstand vorzugsweise aus Bekleidung, Schutzkleidung, medizinischen Verpackungen, Hausverkleidungen, Dachverkleidungen oder Autoabdeckungen ausgewählt ist.

**Revendications**

1. Feuille thermoliée de fibrilles plexifilamentaires à filage éclair non tissées, la feuille présentant

   (a) un poids de base de 55 g/m$^2$ à 90 g/m$^2$,
   (b) une efficacité de filtration des particules de 99,5 % ou plus, mesurée selon le procédé décrit ici,
   (c) une tête hydrostatique de 180 cmH$_2$ou plus, mesurée selon le procédé décrit ici, et
   (d) un taux de transmission de vapeur d'eau de 2000 g/m$^2$/jour ou plus, mesuré selon le procédé décrit ici.

2. Feuille selon la revendication 1, présentant une robustesse de surface avec un taux de réussite d'au moins 80 % mesuré selon le procédé décrit ici, ou présentant une surface spécifique BET de 4 m$^2$/g à 8 m$^2$/g, mesurée selon le procédé décrit ici, ou présentant un indice de cristallinité total inférieur à 74 % mesuré selon le procédé décrit ici.

3. Feuille selon l'une quelconque des revendications 1 à 2, présentant une rigidité au dynamomètre de 0,3 N à 1,5 N, mesurée selon le procédé décrit ici, ou présentant une porosité de Gurley Hill de 10 secondes à 110 secondes, mesurée selon le procédé décrit ici et/ou présentant une résistance moyenne à la déchirure trapézoïdale de 25 N à 60 N, mesurée selon le procédé décrit ici, ou présentant une résistance moyenne à la déchirure des ongles de 45 N à 110 N, mesurée selon le procédé décrit ici.

4. Feuille selon l'une quelconque des revendications 1 à 3, présentant une résistance à la perméation chimique mesurée selon la norme ISO 6529 contre 18 % en poids de $H_2SO_4$ et/ou 40 % en poids de NaOH pendant 120 min ou plus, ou présentant une résistance à la transmission de la vapeur d'eau (Ret) inférieure à 23 $m^2$Pa/W, mesurée selon le procédé décrit ici, ou

présentant une résistivité de surface inférieure à 2,5 x $10^9$ $\Omega$, mesurée selon le procédé décrit ici, ou présentant une émissivité de 0,05 à 0,25, mesurée selon le procédé décrit ici, et une densité optique supérieure à 2,0, mesurée selon le procédé décrit ici.

5. Feuille selon l'une quelconque des revendications 1 à 4, dans laquelle les fibrilles plexifilamentaires à filage par éclair sont composées d'une polyoléfine, sélectionnée parmi le polyéthylène (PE), le polypropylène (PP) et des mélanges/mixtures de ces matériaux, ou dans laquelle la polyoléfine est un polyéthylène haute densité (PEHD), un mélange de polyéthylène haute densité (PEHD) avec un polyéthylène linéaire basse densité (PEBDL), ou un mélange de polyéthylène haute densité (PEHD) avec un polyéthylène basse densité (PEBD).

6. Procédé de préparation d'une feuille de fibrilles plexifilamentaires non tissées à filage éclair, comprenant les étapes suivantes :

(i) génération d'un fluide de filage comprenant

(a) de 8 à 11,5 pour cent en poids d'un polymère, par rapport à la quantité totale de fluide de filage, et
(b) un agent de filage comprenant un solvant contenant du chlore, sélectionné parmi le dichlorométhane, le cis-1,2-dichloroéthylène et le trans-1,2-dichloroéthylène, en combinaison avec un solvant contenant du fluor,

(ii) filage éclair du fluide de filage à une température supérieure à 205 °C et à une pression supérieure à la pression de vapeur du fluide de filage dans une région de pression essentiellement atmosphérique pour former des fibrilles plexifilamentaires du polymère,
(iii) collecte des fibrilles plexifilamentaires du polymère sur un moyen de collecte sous forme de feuille de fibrilles plexifilamentaires non tissées à filage éclair et application d'une pression sur la feuille pour obtenir une feuille consolidée, et
(iv) collage thermique par gaufrage de la feuille consolidée pour obtenir une feuille collée.

7. Procédé selon la revendication 6, dans lequel la feuille consolidée est collée thermiquement en passant par le point de pincement de deux rouleaux d'une gaufreuse, dans lequel la pression statique dans le point de pincement de la gaufreuse est comprise entre 150 kPa et 750 kPa et dans lequel ladite pression est appliquée pendant 10 ms à 20 ms, pour obtenir une feuille collée.

8. Procédé selon la revendication 6 ou 7, dans lequel le procédé comprend en outre le ramollissement mécanique de la feuille collée, ou dans lequel le procédé comprend en outre l'application d'un traitement antistatique à la feuille collée, et/ou

dans lequel la feuille est collée entre 6 % à 90 % d'au moins une surface de la feuille, ou dans lequel la feuille est gaufrée en passant entre deux rouleaux, l'un étant un rouleau de gaufrage gravé d'un motif de lin et l'autre un rouleau de support d'une dureté Shore A de 50 à 70.

9. Procédé selon l'une quelconque des revendications 6 à 8, dans lequel le polymère est une polyoléfine, sélectionnée parmi le polyéthylène (PE), le polypropylène (PP) et des mélanges/mixtures de ces matériaux, ou dans lequel la polyoléfine est un polyéthylène haute densité (PEHD), un mélange de polyéthylène haute densité (PEHD) avec un polyéthylène linéaire basse densité (PEBDL), ou un mélange de polyéthylène haute densité (PEHD) avec un polyéthylène basse densité (PEBD).

10. Procédé selon l'une quelconque des revendications 6 à 9, dans lequel l'agent de filage est essentiellement composé de dichlorométhane en combinaison avec du perfluoropentane, du perfluorohexane, du 1,1,1,3,3-pentafluorobutane, du 1H,4H-perfluorobutane, du 2H,3H-décafluoropentane, du 1H,6H-perfluorohexane ou du 1H-perfluorohexane.

11. Structure multicouche comprenant au moins une feuille selon l'une quelconque des revendications 1 à 5 et au moins une autre feuille ou un autre film.

12. Structure multicouche selon la revendication 11 comprenant au moins une feuille supplémentaire, dans laquelle ladite au moins une feuille supplémentaire est un non-tissé à filage éclair présentant un poids de base de 45 $g/m^2$ à 120

g/m$^2$.

**13.** Structure multicouche selon la revendication 11 ou 12, présentant

    (a) une résistance à la traction moyenne de 200 N à 600 N,
    (b) une résistance moyenne à l'arrachement des ongles de 130 N à 600 N,
    (c) un taux de transmission de vapeur d'eau de 2000 g/m$^2$/jour ou plus, et
    (d) une tête hydrostatique de 250 cm H$_2$O ou plus.

**14.** Utilisation de la feuille selon l'une quelconque des revendications 1 à 5 pour la préparation d'une structure multicouche, ou utilisation d'une feuille selon l'une quelconque des revendications 1 à 5 ou de la structure multicouche selon l'une quelconque des revendications 11 à 13 pour la production de vêtements ou de revêtements de toiture.

**15.** Article comprenant une feuille selon l'une des revendications 1 à 5 ou une structure multicouche selon l'une quelconque des revendications 11 à 13, de préférence dans lequel l'article est choisi parmi les vêtements, les vêtements de protection, les emballages médicaux, les housses de revêtement de maisons, les revêtements de toit ou les housses de voiture.

## EP 4 713 518 B1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3081519 A
- US 3227794 A
- US 3442740 A
- US 3532589 A
- US 5972147 A
- US 3478141 A
- US 4091137 A
- US 6610390 B
- US 2004241399 A1
- US 20030032355 A1
- US 200300165667 A1
- US 7744989 B
- US 5620779 A
- US 5964742 A
- US 6034008 A
- US 3408709 A
- US 5966785 A
- US 6195854 B
- US 7296328 B
- US 3920874 A
- US 3811979 A
- WO 2020026062 A1
- WO 2015195898 A1
- US 3860369 A
- US 3387326 A
- US 3467744 A
- US 5788993 A
- US 8114325 B
- US 3564088 A
- US 3277526 A
- US 3169899 A
- US 3497918 A
- US 3593074 A
- US 3851023 A
- US 4148595 A
- US 5045258 A
- US 5643524 A
- US 5731011 A
- US 5750152 A
- WO 9220511 A1
- US 5123983 A
- US 5296172 A
- US 7118698 B
- US 7621731 B
- US 7786034 B
- US 7998388 B
- US 20030165667 A1
- US 9809004 B2
- US 4472328 A
- US 4350655 A
- US 4777073 A
- US 5750444 A
- US 5294258 A
- US 9816264 B
- US 6004672 A
- US 7300968 B
- US 7179413 B
- US 200300165667 A
- EP 1789622 B1

**Non-patent literature cited in the description**

- **S. BRUNAUER** ; **P. H. EMMETT** ; **E. TELLER**. *J. Am. Chem. Soc.*, 1938, vol. 60, 309-319
- Textiles - Tensile properties of fabrics - Part 1: Determination of maximum force and elongation at maximum force using the strip method. *EN ISO 13934-1*, 1999
- Rubber, vulcanized or thermoplastic - Determination of indentation hardness - Part 1: Durometer method (Shore hardness). The hardness is reported in Shore A. *DIN ISO 7619-1*, 2010
- Protective clothing. Protection against chemicals. Determination of resistance of protective clothing materials to permeation by liquids and gases. *EN ISO 6529*, 2001
- **S.L. AGGARWAL** ; **G.P. TILLEY**. Determination of crystallinity in polyethylene by X-Ray diffractometer. *Journal of Polymer Science*, 1955, vol. 18, 17-26
- *CHEMICAL ABSTRACTS*, 75-09-2

30